(19) Europäisches Patentamt
European Patent Office
Office européen des brevets

(11) EP 4 782 512 A1

(12) EUROPEAN PATENT APPLICATION
published in accordance with Art. 153(4) EPC

(43) Date of publication:
**29.07.2026 Bulletin 2026/31**

(21) Application number: **24871492.5**

(22) Date of filing: **29.07.2024**

(51) International Patent Classification (IPC):
***C09J 7/38*** (2018.01) ***B32B 3/26*** (2006.01)
***B32B 7/023*** (2019.01) ***B32B 27/00*** (2006.01)
***B32B 27/30*** (2006.01) ***C09J 7/20*** (2018.01)
***C09J 133/04*** (2006.01)

(52) Cooperative Patent Classification (CPC):
**B32B 3/26; B32B 7/023; B32B 27/00; B32B 27/30; C09J 7/20; C09J 7/38; C09J 133/04**

(86) International application number:
**PCT/JP2024/027029**

(87) International publication number:
**WO 2025/069690 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 JP 2023163763**

(71) Applicant: **Nitto Denko Corporation**
**Ibaraki-shi, Osaka 567-8680 (JP)**

(72) Inventors:
- **HAMADA Chie**
**Ibaraki-shi, Osaka 567-8680 (JP)**
- **SUGINO Akiko**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) LAMINATE, OPTICAL MEMBER, AND OPTICAL DEVICE

(57) A laminate includes a void-containing layer, and a pressure-sensitive adhesive/adhesive layer directly laminated on one surface or both surfaces of the void-containing layer. The pressure-sensitive adhesive/adhesive layer 12 is formed from a pressure-sensitive adhesive/adhesive including a (meth)acrylic polymer and an organic silyl group-containing compound. An organic silyl group of the organic silyl group-containing compound may or may not necessarily include a carbon-silicon bond. An increase rate of a refractive index of the void-containing layer before and after a heat durability test of holding at a temperature of 65°C and a relative humidity of 95% for 500 hours satisfies the following formula (1):$(|n - n_0| / n_0) \times 100 < 3.0$ (1). In the formula (1), n represents the refractive index of the void-containing layer after the heat durability test, and $n_0$ represents the refractive index of the void-containing layer before the heat durability test.

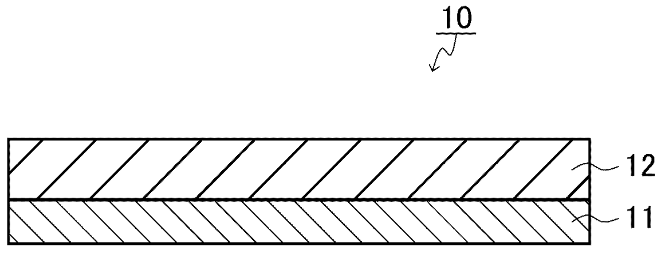


FIG. 1A



Processed by Luminess, 75001 PARIS (FR)

(Cont. next page)

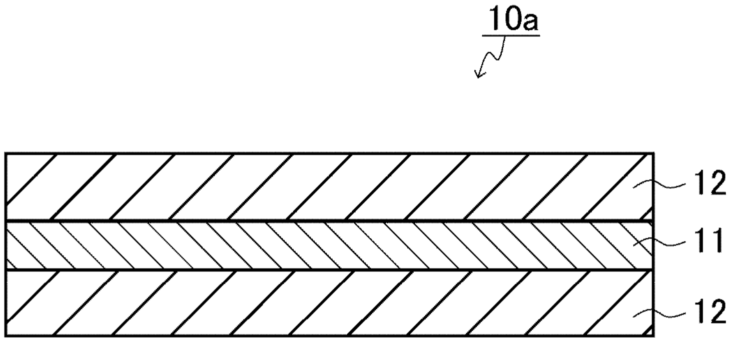


FIG. 1B

## Description

TECHNICAL FIELD

The present disclosure relates to a laminate, an optical member, and an optical apparatus.

BACKGROUND ART

In an optical device, for example, an air layer having a low refractive index is used as a total reflection layer. Specifically, for example, optical film members (e.g., a light guide plate and a reflector) in a liquid crystal device are laminated with an air layer interposed therebetween. However, when the respective members are separated from each other by an air layer, particularly in a case where the members are large in size, problems such as distortion of the members may arise. In addition, due to trends toward thinner devices, it is desired to integrate the respective members. For this reason, the respective members are integrated by a pressure-sensitive adhesive/adhesive without an air layer interposed therebetween (Patent Literature 1). However, if there is no air layer serving as a total reflection layer, optical characteristics may become poor, which causes light leakage.

Therefore, it has been proposed to use a low refractive index layer instead of an air layer. For example, Patent Literature 2 describes a structure in which a light guide plate and a reflector are laminated with a layer having a lower refractive index than that of the light guide plate interposed therebetween. As the low refractive index layer, for example, a void-containing layer having voids is used in order to make the refractive index low as close as possible to air.

Furthermore, in order to introduce a void-containing layer into a device, an integrated structure with a pressure-sensitive adhesive/adhesive layer has also been proposed (Patent Literature 3).

Citation List

Patent Literature

Patent Literature 1: JP 2012-156082 A
Patent Literature 2: JPH10(1998)-62626 A
Patent Literature 3: JP 2014-46518 A

SUMMARY

Technical Problem

A void-containing layer is used, for example, by being laminated with another layer via a pressure-sensitive adhesive/adhesive layer. However, when a void-containing layer and a pressure-sensitive adhesive/adhesive layer are laminated, a pressure-sensitive adhesive or an adhesive composing the pressure-sensitive adhesive/adhesive layer may permeate into voids of the void-containing layer, and fill the voids. As a result, a void fraction of the void-containing layer may decrease, causing a refractive index to increase. As the void fraction of the void-containing layer becomes higher, the pressure-sensitive adhesive or the adhesive tends to permeate more easily. Further, under a high-temperature environment, due to molecular motion (a decrease in elastic modulus) of the pressure-sensitive adhesive or the adhesive, the pressure-sensitive adhesive or the adhesive tends to permeate into the voids more easily. Under a highhumidity environment, due to water absorption of the pressure-sensitive adhesive or the adhesive, the pressure-sensitive adhesive or the adhesive tends to permeate into the voids more easily.

In order to reduce or prevent permeation of the pressure-sensitive adhesive or the adhesive into the voids, it is preferable to use a pressure-sensitive adhesive or an adhesive having an elastic modulus (hardness) as high as possible. However, when the pressure-sensitive adhesive or the adhesive has a high elastic modulus (is hard), adhesive force or adhesion may decrease. Conversely, when the pressure-sensitive adhesive or the adhesive has a low elastic modulus (is soft), high adhesive force or adhesion is readily obtained, but the pressure-sensitive adhesive or the adhesive may tend to permeate into the voids more easily.

Hence, it is an object of the present disclosure to provide a laminate, an optical member, and an optical apparatus that achieve both pressure-sensitive adhesive force and resistance to permeation of a pressure-sensitive adhesive or an adhesive into voids of a void-containing layer. Solution to Problem

In order to achieve the above object, the present disclosure provides a laminate including a void-containing layer, and a pressure-sensitive adhesive/adhesive layer. The pressure-sensitive adhesive/adhesive layer is directly laminated

on one surface or both surfaces of the void-containing layer. The pressure-sensitive adhesive/adhesive layer is formed from a pressure-sensitive adhesive/adhesive including a (meth)acrylic polymer and an organic silyl group-containing compound. An organic silyl group of the organic silyl group-containing compound may or may not necessarily include a carbon-silicon bond. An increase rate of a refractive index of the void-containing layer before and after a heat durability test of holding at a temperature of 65°C and a relative humidity of 95% for 500 hours satisfies the following formula (1):

$$(|n - n_0| / n_0) \times 100 < 3.0 \quad (1)$$

in the formula (1),

n represents a refractive index of the void-containing layer after the heat durability test, and
$n_0$ represents a refractive index of the void-containing layer before the heat durability test.

The present disclosure also provides an optical member including the laminate of the present disclosure.
The present disclosure also provides an optical apparatus including the optical member of the present disclosure.

Advantageous Effects of Invention

The present disclosure can provide a laminate, an optical member, and an optical apparatus that achieve both pressure-sensitive adhesive force and resistance to permeation of a pressure-sensitive adhesive or an adhesive into voids of a void-containing layer.

BRIEF DESCRIPTION OF DRAWINGS

[FIGs. 1A and 1B] FIGs. 1A and 1B are cross-sectional views illustrating an example configuration of a laminate of the present disclosure.
[FIGs. 2A and 2B] FIGs. 2A and 2B are cross-sectional views illustrating another example configuration of the laminate of the present disclosure.
[FIGs. 3A and 3B] FIGs. 3A and 3B are cross-sectional views illustrating still another example configuration of the laminate of the present disclosure.

DESCRIPTION OF EMBODIMENTS

The present disclosure will be described more specifically below with reference to illustrative examples. It is to be noted, however, that the present disclosure is by no means limited by the following descriptions.
In the laminate of the present disclosure, for example, the content of the organic silyl group-containing compound may be 5.0 parts by mass or less based on 100 parts by mass of the (meth)acrylic polymer.
In the laminate of the present disclosure, for example, the organic silyl group-containing compound may be a compound containing an alkoxysilyl group.
In the laminate of the present disclosure, for example, the weight-average molecular weight (Mw) of the (meth) acrylic polymer may be 1,500,000 to 4,000,000.
In the laminate of the present disclosure, for example, the pressure-sensitive adhesive/adhesive layer may be formed from a pressure-sensitive adhesive/adhesive containing the (meth)acrylic polymer and a crosslinking agent, where the pressure-sensitive adhesive/adhesive may have a Gel fraction larger than 85%.
In the laminate of the present disclosure, for example, the (meth)acrylic polymer may contain a nitrogen-containing monomer as a monomer unit in an amount of 1 to 30 mass%. As used herein, "mass%" and "weight%" may be read interchangeably, and "parts by mass" and "parts by weight" may be read interchangeably, unless otherwise specified.
In the laminate of the present disclosure, for example, the nitrogen-containing monomer may be a heterocycle-containing acrylic monomer.
In the laminate of the present disclosure, for example, the (meth)acrylic polymer may contain acrylic acid as a monomer unit in an amount of 0.5 to 20 mass%.
In the laminate of the present disclosure, for example, the void-containing layer may not necessarily contain an organic fluorine compound. The absence of an organic fluorine compound in the void-containing layer enables providing a laminate, an optical member, and an optical apparatus including an environmentally friendly void-containing layer. Here, the "absence" of an organic fluorine compound in the void-containing layer means that an organic fluorine compound

cannot be detected by the analysis of the void-containing layer, and the presence of an organic fluorine compound in the void-containing layer cannot be proven.

The laminate of the present disclosure may include, for example, an intermediate layer present between the void-containing layer and the pressure-sensitive adhesive/adhesive layer, where the intermediate layer may be a layer formed by uniting the void-containing layer and the pressure-sensitive adhesive/adhesive layer.

In the laminate of the present disclosure, for example, a thickness of the intermediate layer may be 10 to 100 nm.

As used herein, a "pressure-sensitive adhesive/adhesive layer" refers to a layer formed of at least either of a pressure-sensitive adhesive or an adhesive. As used herein, the " pressure-sensitive adhesive/adhesive layer" may be a "pressure-sensitive adhesive layer" formed of a pressure-sensitive adhesive, an "adhesive layer" formed of an adhesive, or a layer including both a pressure-sensitive adhesive and an adhesive, unless otherwise specified. Further, as used herein, a pressure-sensitive adhesive and an adhesive is sometimes collectively referred to as a "pressure-sensitive adhesive/adhesive". In general, an agent having relatively weak pressure-sensitive adhesive force or adhesive force (e.g., an agent that bonds adherends in a peelable manner) is sometimes called a "pressure-sensitive adhesive", and an agent having relatively strong pressure-sensitive adhesive force or adhesive force (e.g., an agent that bonds adherends in a non-peelable or hardly peelable manner) is sometimes called an "adhesive", for distinction. As used herein, there is no clear distinction between a "pressure-sensitive adhesive" and an "adhesive". Also, as used herein, there is no clear distinction between "pressure-sensitive adhesive force" and "adhesive force".

As used herein, "on" or "on a surface" may indicate directly contacting or being in contact with the surface with another layer or the like interposed therebetween.

In the laminate of the present disclosure, for example, the (meth)acrylic polymer may be a (meth)acrylic polymer having a weight-average molecular weight of 2,000,000 to 3,500,000 obtained by polymerizing, as monomer components, 3 to 20 mass% of a heterocycle-containing acrylic monomer (heterocycle-containing acrylate), 0.5 to 5 mass% of (meth) acrylic acid, 0.05 to 2 mass% of a hydroxyalkyl (meth)acrylate, and 83 to 96.45 mass% of an alkyl (meth)acrylate.

In the pressure-sensitive adhesive/adhesive layer of the laminate of the present disclosure, for example, the nitrogen-containing monomer may be a monomer having one or two reactive double bonds per molecule. The monomer having one or two reactive double bonds per molecule may be, for example, a heterocycle-containing acrylic monomer (heterocycle-containing acrylate).

In the laminate of the present disclosure, a Gel fraction of the pressure-sensitive adhesive/adhesive forming the pressure-sensitive adhesive/adhesive layer may be, for example, 85 mass% or more, or larger than 85 mass%, and may be, for example, 90 mass% or more, 91 mass% or more, or 93 mass% or more, and may be, for example, 100 mass% or less, 99 mass% or less, or 98 mass% or less.

In the laminate of the present disclosure, an initial refractive index of the void-containing layer before the heat durability test (hereinafter also referred to as an "initial refractive index") may be, for example, 1.30 or less or less than 1.30, and may be, for example, 1.25 or less, less than 1.25, 1.20 or less, or less than 1.20. A lower limit value of the initial refractive index may be, for example, 1.05 or more, 1.06 or more, 1.07 or more, or 1.08 or more.

In the laminate of the present disclosure, a refractive index of the void-containing layer after the heat durability test may be, for example, 1.50 or less or less than 1.50, and may be, for example, 1.40 or less, less than 1.40, 1.30 or less, or less than 1.30. A lower limit value of the refractive index of the void-containing layer after the heat durability test may be, for example, 1.05 or more, 1.06 or more, 1.07 or more, or 1.08 or more.

In the laminate of the present disclosure, a change amount in the refractive index of the void-containing layer before and after the heat durability test that involves holding at a temperature of 65°C and a relative humidity of 95% for 500 hours, which is represented by $[n-n_0|$, may be for example, less than 0.04. The change amount in the refractive index of the void-containing layer represented by $|n-n_0|$ may be, for example, 0.03 or less, less than 0.03, 0.02 or less, or less than 0.02. A lower limit value of the change amount in the refractive index of the void-containing layer represented by $|n-n_0|$ is not particularly limited, and may be, for example, 0 or more, or a numerical value exceeding 0. Here, $n_0$ is the refractive index of the void-containing layer before the heat durability test (initial refractive index) as in the above formula (1), and n is the refractive index of the void-containing layer after the heat durability test as in the above formula (1).

In the laminate of the present disclosure, an increase rate (%) of the refractive index of the void-containing layer before and after a heat durability test that involves holding the laminate at a temperature of 65°C and a relative humidity of 95% for 500 hours, which is represented by $(|n-n_0|/n_0)\times 100$ in the above formula (1), is less than 3.0%, as shown in the above formula (1). The increase rate of the refractive index of the void-containing layer represented by $(|n-n_0|/n_0)\times 100$ may be, for example, 2.0% or less, less than 2.0%, 1.0% or less, or less than 1.0%. A lower limit value of the increase rate of the refractive index of the void-containing layer represented by $(|n-n_0|/n_0)\times 100$ is not particularly limited, and may be, for example, 0 or more, or a numerical value exceeding 0.

In the laminate of the present disclosure, for example, a void fraction of the void-containing layer may be 35 vol% or more.

In the laminate of the present disclosure, for example, the void-containing layer may be a porous material in which fine pore particles are chemically bonded to each other.

In the laminate of the present disclosure, the pressure-sensitive adhesive/adhesive layer may be, for example, a layer formed by a method including preparing a pressure-sensitive adhesive/adhesive coating solution containing a (meth)acrylic polymer and an organic silyl group-containing compound, applying the pressure-sensitive adhesive/adhesive coating solution to a base, and heating and drying the base to which the pressure-sensitive adhesive/adhesive coating solution has been applied. In this way, the laminate of the present disclosure may be, for example, configured such that the pressure-sensitive adhesive/adhesive layer is formed from a pressure-sensitive adhesive/adhesive coating solution having a specific composition, and integrated with the void-containing layer. This allows, for example, prevention of significant permeation of the pressure-sensitive adhesive/adhesive layer into the void-containing layer, even under a heat durability test over a particularly long period. The pressure-sensitive adhesive/adhesive coating solution may further contain, for example, a crosslinking agent, and may contain other component(s) as described below.

In the laminate of the present disclosure, reasons (mechanisms) why both pressure-sensitive adhesive force or adhesive force and resistance to permeation of a pressure-sensitive adhesive or an adhesive into voids can be achieved are considered to be, for example, as follows. For example, by forming a pressure-sensitive adhesive/adhesive layer using a specific pressure-sensitive adhesive, both pressure-sensitive adhesive force or adhesive force and resistance to permeation of a pressure-sensitive adhesive or an adhesive into voids can be achieved. More specifically, for example, by forming a pressure-sensitive adhesive/adhesive layer using the specific (meth)acrylic polymer as described above and, as necessary, a crosslinking agent, an intermediate layer is formed by unification of a part of the void-containing layer and a part of the pressure-sensitive adhesive/adhesive layer. The use of such specific (meth)acrylic polymer as described above prevents the intermediate layer from excessively spreading even under conditions such as the heat durability test. In addition, the intermediate layer functions as a stopper, thereby suppressing decrease in void fraction due to voids of the void-containing layer being filled with the pressure-sensitive adhesive. Even when molecular motion of the pressure-sensitive adhesive increases under heating, the intermediate layer formed from the pressure-sensitive adhesive and a high-void-fraction layer can easily function as a strong and dense stopper, because of the high elastic modulus of the pressure-sensitive adhesive, thereby reducing permeation of the pressure-sensitive adhesive into the high-void-fraction layer. However, these mechanisms are merely examples and do not limit the present disclosure in any way.

The pressure-sensitive adhesive/adhesive coating solution may, for example, contain a monomer having one or two reactive double bonds per molecule, thereby enabling, upon heating, a crosslinking reaction with a crosslinking agent such as an isocyanate-based crosslinking agent or an epoxy-based crosslinking agent. It is considered that, during the crosslinking reaction, coexistence of the monomer having one or two reactive double bonds per molecule and an organic peroxide serving as a hydrogen abstraction initiator enables even semi-high-molecular-weight polymer components having a molecular weight of 10,000 or less contained in the pressure-sensitive adhesive/adhesive coating solution to be crosslinked at high density, thereby enabling reduction of permeation of components from the pressure-sensitive adhesive/adhesive coating solution into the void-containing layer at a higher level. In other words, although semi-high-molecular-weight polymer components having a molecular weight of 10,000 or less tend to permeate into voids of the void-containing layer due to their small molecular size, it is considered that permeation into the voids of the void-containing layer is reduced as the molecular size increases due to the crosslinking reaction. Furthermore, it is inferred that coexistence of the monomer having one or two reactive double bonds per molecule during the crosslinking reaction enables a graft reaction with a main chain of the (meth)acrylic polymer, and high-density crosslinking starting from graft chains, thereby reducing an amount itself of the semi-high-molecular-weight polymer that can become a sol component. However, these mechanisms are also merely examples and do not limit the present disclosure in any way.

In a pressure-sensitive adhesive/adhesive coating solution for forming the pressure-sensitive adhesive/adhesive layer in the laminate of the present disclosure, the nitrogen-containing monomer preferably has a small number of functional groups (the number of reactive double bonds per molecule) in order to efficiently crosslink main chains with each other in a graft reaction, and for example, as described above, the number of reactive double bonds is preferably one or two per molecule.

Even when a monomer having one or two reactive double bonds is mixed during production of the (meth)acrylic polymer, it is difficult to reduce an amount of the above-described semi-high-molecular-weight polymer (polymer having a small molecular weight and tending to permeate into voids of the void-containing layer). However, the present disclosure uses a pressure-sensitive adhesive/adhesive coating solution obtained by mixing a monomer having one or two reactive double bonds with a (meth)acrylic polymer afterward, and involves subjecting the coating solution to a crosslinking reaction, thereby causing, for example, the graft reaction as described above to occur and reducing the amount of the semi-high-molecular-weight polymer.

In the present disclosure, "(meth)acrylic" refers to at least one of acrylic or methacrylic. For example, "(meth) acrylic acid" refers to at least one of acrylic acid or methacrylic acid. "(Meth)acrylic acid ester" refers to at least one of an acrylic acid ester or a methacrylic acid ester. "(Meth)acrylic acid methyl" refers to at least one of methyl acrylate or methyl methacrylate.

In the present disclosure, a "(meth)acrylic polymer" refers to, for example, a polymer having a structure obtained by polymerizing a component including at least one selected from the group consisting of acrylic acid, methacrylic acid, an

acrylic acid ester, a methacrylic acid ester, a monomer having an acryloyl group, and a monomer having a methacryloyl group. The component may appropriately or may not necessarily contain a substance other than at least one selected from the group consisting of acrylic acid, methacrylic acid, an acrylic acid ester, a methacrylic acid ester, a monomer having an acryloyl group, and a monomer having a methacryloyl group.

As used herein, an "acrylic monomer" refers to, for example, a monomer including at least one selected from the group consisting of acrylic acid, an acrylic acid ester, and a monomer having an acryloyl group.

As used herein, an "isocyanate-based crosslinking agent" refers to, for example, a crosslinking agent including an isocyanate group (isocyanato group) in the molecule. In the present disclosure, the number of the isocyanate group (isocyanato group) per molecule in the isocyanate-based crosslinking agent is not particularly limited, and is preferably 2 or more, and may be, for example, 2, 3, or 4. An upper limit value thereof is not particularly limited and is, for example, 10 or less.

As used herein, an "epoxy-based crosslinking agent" refers to, for example, a crosslinking agent including an epoxy group in the molecule. In the present disclosure, the number of the epoxy group per molecule in the epoxy-based crosslinking agent is not particularly limited, and is preferably 2 or more, and may be, for example, 2, 3, or 4. An upper limit value thereof is not particularly limited and is, for example, 10 or less.

[1. Laminate, optical member, and optical apparatus]

As described above, the laminate of the present disclosure includes a void-containing layer and a pressure-sensitive adhesive/adhesive layer. The pressure-sensitive adhesive/adhesive layer is directly laminated on one surface or both surfaces of the void-containing layer. As used herein, the pressure-sensitive adhesive/adhesive layer being "directly laminated" on the void-containing layer means, for example, that the pressure-sensitive adhesive/adhesive layer may be in direct contact with the void-containing layer, or the pressure-sensitive adhesive/adhesive layer may be laminated on the void-containing layer via the intermediate layer.

FIG. 1A is a cross-sectional view illustrating an example of a configuration of the laminate of the present disclosure. As shown in FIG. 1A, a laminate 10 includes a pressure-sensitive adhesive/adhesive layer 12 directly laminated on one surface of a void-containing layer 11. FIG. 1B is a cross-sectional view illustrating another example of the configuration of the laminate of the present disclosure. As shown in FIG. 1B, a laminate 10a includes the pressure-sensitive adhesive/adhesive layers 12 directly laminated on both surfaces of the void-containing layer 11.

As described above, the laminate of the present disclosure may include an intermediate layer present between the void-containing layer and the pressure-sensitive adhesive/adhesive layer, where the intermediate layer may be a layer formed by uniting the void-containing layer and the pressure-sensitive adhesive/adhesive layer. FIGs. 2A and 2B show examples of such laminates of the present disclosure. As shown in FIGs. 2A and 2B, a laminate 10b of FIG. 2A includes the pressure-sensitive adhesive/adhesive layer 12 directly laminated on one surface of the void-containing layer 11. The laminate 10b is the same as the laminate 10 of FIG. 1A except that an intermediate layer 13 is present between the void-containing layer 11 and the pressure-sensitive adhesive/adhesive layer 12. The intermediate layer 13 is a layer formed by uniting the void-containing layer 11 and the pressure-sensitive adhesive/adhesive layer 12. As shown in FIG. 2B, a laminate 10c includes the pressure-sensitive adhesive/adhesive layers 12 directly laminated on both surfaces of the void-containing layer 11. The laminate 10c is the same as the laminate 10a of FIG. 1B except that intermediate layers 13 are present between the void-containing layer 11 and the respective pressure-sensitive adhesive/adhesive layers 12. Each of the intermediate layers 13 is, as in FIG. 2A, a layer formed by uniting the void-containing layer 11 and the corresponding pressure-sensitive adhesive/adhesive layer 12.

The laminate of the present disclosure may or may not necessarily include a constituent element other than the void-containing layer, the pressure-sensitive adhesive/adhesive layer, and the intermediate layer. The other constituent element is not particularly limited, and may be, for example, a base or the like. The base is not particularly limited either and may be, for example, a film (e.g., a resin film), a glass plate, or the like, as described below. FIG. 3A and 3B show examples of such a laminate of the present disclosure. As shown in FIG. 3A, a laminate 10d is the same as the laminate 10b of FIG. 2A except that a base 14 is provided on and in direct contact with a surface of the void-containing layer 11 opposite to the pressure-sensitive adhesive/adhesive layer 12, and a further base 14 is provided on and in direct contact with a surface of the pressure-sensitive adhesive/adhesive layer 12 opposite to the void-containing layer 11. As shown in FIG. 3B, a laminate 10e is the same as the laminate 10c of FIG. 2B except that the bases 14 are provided on and in direct contact with the surfaces of the respective pressure-sensitive adhesive/adhesive layers 12 opposite to the void-containing layer 11. In FIGs. 3A and 3B, the bases 14 are provided on both surfaces of the laminate. However, the present disclosure is not limited thereto, and for example, the base 14 may be provided on only one surface. In FIGs. 3A and 3B, the bases 14 are provided so as to be in direct contact with the void-containing layer 11 or the pressure-sensitive adhesive/adhesive layer(s) 12. However, the present disclosure is not limited thereto, and for example, an other constituent element may be present between the base 14 and the void-containing layer 11 or the pressure-sensitive adhesive/adhesive layer 12. Further, the other constituent element is not particularly limited and may be, for example, an optical functional layer. The optical

functional layer is not particularly limited either, and may be, for example, an optical functional layer used in a general optical film, and may be, for example, a microlens film, a prism film, a diffusion film, a polarization reflection film, a polarizing film, a retardation film, a high refractive-index layer, or the like.

The laminate of the present disclosure may be, for example, a laminate of the pressure-sensitive adhesive/adhesive layer and the void-containing layer, or a laminate of the pressure-sensitive adhesive/adhesive layer, the intermediate layer, and a void-containing layer, having a light transmittance of 80% or more. The haze of the laminate may be, for example, 3% or less. The light transmittance may be, for example, 82% or more, 84% or more, 86% or more, or 88% or more, and the upper limit is not particularly limited, and is ideally 100 %, and may be, for example, 95% or less, 92% or less, 91% or less, or 90% or less. The haze of the laminate can be measured, for example, by the same method as the method for measuring the haze of the void-containing layer to be described later. The light transmittance is a transmittance of light at a wavelength of 550 nm, and can be measured by, for example, the following measurement method.

(Measurement method of light transmittance)

A spectrophotometer U-4100 (trade name, manufactured by Hitachi, Ltd.) is used, and the laminate is used as a sample to be measured. The total light transmittance (light transmittance) of the sample is measured with the total light transmittance of air being considered to be 100%. The value of the total light transmittance (light transmittance) is a value measured at a wavelength of 550 nm.

In the laminate of the present disclosure, for example, a pressure-sensitive adhesive force or an adhesive force of the pressure-sensitive adhesive/adhesive layer may be, for example, 0.7 N/25 mm or more, 0.8 N/25 mm or more, 1.0 N/25 mm or more, or 1.5 N/25 mm or more, and may be 50 N/25 mm or less, 30 N/25 mm or less, 10 N/25 mm or less, 5 N/25 mm or less, or 3 N/25 mm or less. From the viewpoint of risks of peeling off at the time of handling when the laminate is adhered to other layers, it is preferable that the pressure-sensitive adhesive force or the adhesive force of the pressure-sensitive adhesive/adhesive layer be not too low. In addition, from the viewpoint of rework at the time of reattachment, it is preferable that the pressure-sensitive adhesive force or the adhesive force of the pressure-sensitive adhesive/adhesive layer be not too high. The pressure-sensitive adhesive force or the adhesive force of the pressure-sensitive adhesive/adhesive layer can be measured, for example, as follows.

(Measurement method of pressure-sensitive adhesive force or adhesive force)

From the laminated film of the present disclosure (the film in which the laminate of the present disclosure is formed on a resin film base), a strip-shaped piece with a size of 50 mm × 140 mm is obtained as a sample, and the sample is fixed to a stainless plate with a double-sided tape. An acrylic pressure-sensitive adhesive layer (thickness: 20 μm) is adhered to a PET film (T100: manufactured by Mitsubishi Plastics, Inc.), and the thus-obtained adhesive tape is cut into a piece with a size of 25 mm × 100 mm. The thus-obtained cut piece is adhered to the laminated film of the present disclosure on the side opposite to the resin film to form a laminate of the PET film and the laminated film. Then, the sample is chucked in an autograft tensile testing machine (AG-Xplus, manufactured by Shimadzu Corporation) with a distance between chucks being 100 mm, and the tensile test is performed at a tensile speed of 0.3 m/min. The mean value of the peel test data for 50 mm is set as the peel adhesion strength, i.e., pressure-sensitive adhesive force. The adhesive force can also be measured by the same measurement method. As used herein, there is no clear distinction between the "pressure-sensitive adhesive force" and the "adhesive force".

The laminate of the present disclosure may be formed on a base such as a film, for example. The film may be, for example, a resin film. In general, one having a relatively small thickness is sometimes called a "film" and one having a relatively large thickness is sometimes called a "sheet" for distinction. However, in the present disclosure, there is no particular distinction between a "film" and a "sheet".

The base is not particularly limited, and preferable examples thereof include thermoplastic resin bases, glass bases, inorganic bases represented by silicon, plastics molded with thermosetting resins or the like, elements such as semiconductors, and carbon fiber-based materials represented by carbon nanotubes, but not limited thereto. Examples of the form of the base include a film and a plate. Examples of thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP).

The optical member of the present disclosure is not particularly limited and may be, for example, an optical film including the laminate of the present disclosure.

The optical apparatus (optical device) of the present disclosure is not particularly limited and may be, for example, an image display or an illumination apparatus. Examples of the image display include a liquid crystal display, an organic Electro Luminescence (EL) display, and a micro Light Emitting Diode (LED) display. Examples of the illumination apparatus include an organic EL illumination apparatus.

[2. Void-containing layer]

The void-containing layer in the laminate of the present disclosure (hereinafter also referred to as the "void-containing layer of the present disclosure") will be described with reference to illustrative examples. Note that, the void-containing layer of the present disclosure is not limited thereto.
The void-containing layer of the present disclosure may have, for example, a void fraction of 35 vol% or more. Also, the void-containing layer of the present disclosure may have, for example, a peak pore diameter of 50 nm or less. However, this merely is an example, and the void-containing layer of the present disclosure is not limited thereto.
The void fraction may be, for example, 35 vol% or more, 38 vol% or more, or 40 vol% or more, and may be, 90 vol% or less, 80 vol% or less, or 75 vol% or less. The void-containing layer of the present disclosure may be, for example, a highly void-containing layer having a void fraction of 60 vol% or more.
The void fraction can be measured, for example, by the following measurement method.

(Measurement method of void fraction)

If the layer whose void fraction is to be measured is a single layer containing voids, the ratio (volume ratio) between the element of the layer and the air can be calculated by a standard method (for example, weight and volume are measured to calculate the density), whereby the void fraction (vol%) can be calculated. Further, since the refractive index and the void fraction have a correlation, the void fraction can be calculated from the value of the refractive index as a layer, for example. Specifically, for example, the void fraction is calculated according to the Lorentz - Lorenz's formula from the value of the refractive index measured by an ellipsometer.
The void-containing layer of the present disclosure can be produced, for example, by chemical bonding of gel pulverized products (microporous particles) as will be described below. In this case, the voids of the void-containing layer can be divided into three types (1) to (3) below for convenience.

(1) Voids contained in raw material gel itself (inside the particles)
(2) Voids contained in gel pulverized product unit
(3) Voids between gel pulverized products created by deposition of gel pulverized products

The voids (2) are voids formed during pulverization, which are different from the voids (1) that can be formed in each block when each particle group generated by pulverizing the gel is regarded as one mass (block) regardless of the size or the like of the gel pulverized product (microporous particle). The voids (3) are voids created because of irregularity in the sizes or the like of the gel pulverized products (microporous particles) in pulverization (e.g., media-less pulverization). The void-containing layer of the present disclosure contains the voids (1) to (3), whereby an appropriate void fraction and peak pore diameter can be achieved, for example.
The peak pore diameter may be, for example, 5 nm or more, 10 nm or more, or 20 nm or more, and may be 50 nm or less, 40 nm or less, or 30 nm or less. In the void-containing layer, if the peak pore diameter is too large in a state where the void fraction is high, light is scattered, which makes the void-containing layer opaque. Further, in the present disclosure, the lower limit value of the peak pore diameter of the void-containing layer is not particularly limited, but it is preferable that the peak pore diameter is not too small because it is difficult to increase the void fraction if the peak pore diameter be too small. In the present disclosure, the peak pore diameter can be measured, for example, by the following method.

(Measurement method of peak pore diameter)

The peak pore diameter is calculated from the results of the BJH plot and the BET plot by nitrogen adsorption and the isothermal adsorption line using a pore distribution/specific surface area analyzer (trade name: BELLSORP MINI, MicrotracBEL Corp.).
The thickness of the void-containing layer of the present disclosure is not particularly limited, and may be, for example, 100 nm or more, 200 nm or more, or 300 nm or more, and may be 10000 nm or less, 5000 nm or less, or 2000 nm or less.
As will be described below, the void-containing layer of the present disclosure uses pulverized products of the porous gel material, for example. Thus, the three-dimensional structure of the porous gel material is destroyed, whereby a new three-dimensional structure different from that of the porous gel material is formed. In this way, the void-containing layer of the present disclosure becomes a layer having a new pore structure (new void-containing structure) that cannot be obtained in a layer formed using the porous gel material. That is, a nano-scale void-containing layer having a high void fraction can be formed. Moreover, for example, when the void-containing layer of the present disclosure is a silicone porous material, the pulverized products in the void-containing layer are chemically bonded to each other while adjusting the number of functional groups having siloxane bonds of the silicon compound gel, for example. Herein, a "silicone porous

material" is a high polymer porous material containing siloxane bonds and includes, for example, a porous material containing silsesquioxane as a structure unit. After a new three-dimensional structure is formed as a void-containing layer precursor, pulverized products are bonded chemically (e.g., crosslinked) to each other in the bonding process. Thus, when the void-containing layer of the present disclosure is a functional porous material, the void-containing layer has a structure with voids, for example, but can maintain sufficient strength and sufficient flexibility. Therefore, according to the present disclosure, the void-containing layer can be easily and simply applied to various objects.

For example, the void-containing layer of the present disclosure includes pulverized products of a porous gel material as will be described below, and the pulverized products are chemically bonded to each other. In the void-containing layer of the present disclosure, the form of the chemical bonding (chemical bonds) between the pulverized products is not limited to particular forms. Specifically, the chemical bonds may be crosslinking bonds, for example. The method for chemically bonding the pulverized products to each other is as described in detail in, for example, the method for producing the void-containing layer described above.

The crosslinking bonds are siloxane bonds, for example. Examples of the siloxane bonds include T2, T3, and T4 bonds shown below. When the silicone porous material of the present disclosure includes siloxane bonds, the silicone porous material may include any one of the T2, T3, and T4 bonds, any two of them, or all three of them, for example. As the proportions of T2 and T3 among the siloxane bonds become higher, the silicone porous material becomes more flexible, so that it is expected that the silicone porous material exhibits characteristics intrinsic to the gel. However, the film strength becomes deteriorated. When the proportion of T4 in the siloxane bonds becomes higher, a film strength is more likely to be obtained, whereas voids become smaller, resulting in deteriorated flexibility. Thus, it is preferable to adjust the proportions of T2, T3, and T4 depending on the intended use of the silicone porous material, for example.

[Chemical Formula 1]

T2

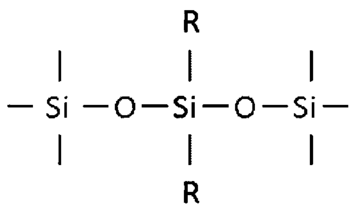

T3

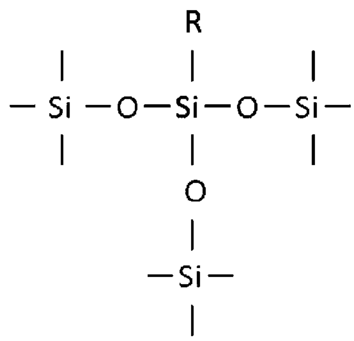

T4

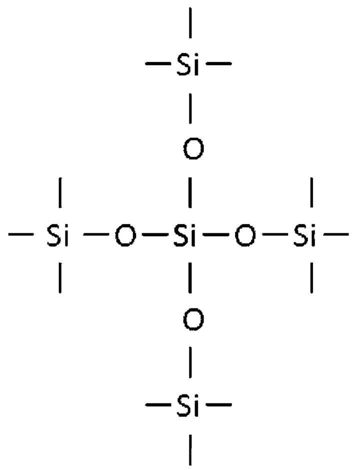

In the case where the void-containing layer of the present disclosure includes the siloxane bonds, the ratio of T2, T3, and T4 expressed relatively assuming that the proportion of T2 is "1" is as follows, for example: T2 : T3 : T4 = 1 :[1 to 100] :[0 to 50], 1 :[1 to 80] :[1 to 40], or 1 :[5 to 60] :[1 to 30].

It is preferable that silicon atoms contained in the void-containing layer of the present disclosure be bonded to each other through siloxane bonds, for example. As a specific example, the proportion of unbonded silicon atoms (i.e., residual silanol) among all the silicon atoms contained in the silicone porous material is less than 50%, 30% or less, or 15% or less, for example.

As described above, the void-containing layer of the present disclosure may include substantially no fluorine compound, for example. The void-containing layer including substantially no fluorine compound allows, for example, further reducing permeation of a pressure-sensitive adhesive or an adhesive into voids of the void-containing layer. As a result, an increase in refractive index after the heat durability test is further suppressed.

The void-containing layer of the present disclosure has a pore structure. In the present disclosure, the size of each void space in the pore structure indicates, out of the diameter of the long axis and the diameter of the short axis of the void space (pore), the diameter of the long axis. The size of the void space (pore) is, for example, 5 nm to 50 nm. The lower limit of the void size is, for example, 5 nm or more, 10 nm or more, or 20 nm or more. The upper limit of the void size is, for example, 50 nm or less, 40 nm or less, or 30 nm or less. The range of the void size is, for example, 5 nm to 50 nm, or 10 nm to

40 nm. A preferable void size is determined depending on the intended use of the void-containing structure. Thus, it is necessary to adjust the void size to a desired value depending on the intended use, for example. The void size can be evaluated in the following manner, for example.

(SEM observation of cross section of void-containing layer)

In the present disclosure, the void-containing layer can be observed and analyzed using a scanning electron microscopy (SEM). Specifically, for example, the void-containing layer is subjected to FIB processing (acceleration voltage: 30 kV) while being cooled, and the cross-sectional electronic image of the obtained cross-sectional sample can be obtained by FIB-SEM (trade name: Helios NanoLab 600, manufactured by FEI Company, acceleration voltage: 1 kV) at an observing magnification of 100,000×.

(Evaluation of void size)

In the present disclosure, the void size can be quantified according to the BET test. Specifically, 0.1 g of a sample (the void-containing layer of the present disclosure) is set in a capillary tube of a pore distribution/surface area measurement apparatus (trade name: BELLSORP MIN, manufactured by MicrotracBEL Corp.), and dried under reduced pressure at room temperature for 24 hours to remove gas in the void-containing structure. Then, a BET plot and a BJH plot, and an adsorption isotherm are created by causing the sample to adsorb nitrogen gas, whereby the pore distribution is determined. On the basis of the thus-determined pore distribution, the void size can be evaluated.

The void-containing layer of the present disclosure may have, for example, a pore structure (porous structure) as mentioned above, and the pore structure may be an open-cell structure in which pores are interconnected with each other, for example. The open-cell structure means that, for example, in the void-containing layer, pores three-dimensionally communicate with each other. In other words, the open-cell structure means the state where void spaces inside the pore structure are interconnected with each other. When a porous material has an open-cell structure, this structure allows the bulk body to have a higher void fraction. However, in the case where closed-cell particles such as hollow silica particles are used, an open-cell structure cannot be formed. In contrast, in the void-containing layer of the present disclosure, an open-cell structure can be formed easily for the following reason. Sol particles (pulverized products of a porous gel material for forming a sol) each have a dendritic structure, so that the open-cell structure is formed as a result of sedimentation and deposition of the dendritic particles in a coating film (a coating film formed of a sol containing pulverized products of the porous gel material). Further, it is more preferable that the void-containing layer of the present disclosure form a monolith structure, which is an open-cell structure including two or more types of micropore distributions. The monolith structure refers to a layered structure including a structure in which nano-sized voids are present and an open-cell structure formed by aggregation of the nano-sized spaces, for example. When the monolith structure is formed, for example, the film strength is imparted by the minute voids whereas a high void fraction is achieved by the presence of the voids forming a bulky open-cell structure. Thus, both a film strength and a high void fraction can be attained. In order to form such a monolith structure, for example, first, in the porous gel material before being pulverized into the pulverized products, it is important to control the micropore distributions in a void-containing structure to be generated. Also, the monolith structure can be formed by, for example, controlling, at the time of pulverizing the porous gel material, the particle sizes of the pulverized products so that a desired particle size distribution can be obtained.

In the void-containing layer of the present disclosure, the haze value indicating the transparency is not particularly limited. The lower limit of the haze is, for example, 0.1% or more, 0.2% or more, or 0.3% or more. The upper limit of the haze is, for example, 10% or less, 5% or less, or 3% or less. The range of the haze value is, for example, 0.1% to 10%, 0.2% to 5%, or 0.3% to 3%.

The haze value can be measured in the following manner, for example.

(Evaluation of haze)

A void-containing layer (the void-containing layer of the present disclosure) is cut into a piece with a size of 50 mm × 50 mm, and the thus-obtained cut piece is set in a haze meter (HM-150, manufactured by Murakami Color Research Laboratory) to measure the haze. The haze value is calculated by the following formula.

$$\text{Haze (\%)} = [\text{diffuse transmittance (\%)}/\text{total light transmittance (\%)}] \times 100\ (\%)$$

The "refractive index" of a given medium generally refers to the ratio of transmission speed of the wavefront of light in vacuum to the phase velocity of the light in the medium. The refractive index of the void-containing layer of the present disclosure is not particularly limited, and the upper limit thereof is, for example, 1.3 or less, less than 1.3, 1.25 or

less, 1.2 or less, or 1.15 or less, the lower limit thereof is, for example, 1.05 or more, 1.06 or more, or 1.07 or more, and the range thereof is, for example, 1.05 or more and 1.3 or less, 1.05 or more and less than 1.3, 1.05 or more and 1.25 or less, 1.06 or more and less than 1.2, or 1.07 or more and 1.15 or less.

In the present disclosure, the refractive index refers to the one measured at a wavelength of 550 nm, unless otherwise stated. The method for measuring the refractive index is not particularly limited. For example, the refractive index can be measured in the following manner.

(Evaluation of refractive index)

A laminate sample in which a pressure-sensitive adhesive attached onto a void-containing layer is prepared. A prism of a prism coupler (manufactured by Metricon Corporation) is brought into close contact with a base surface of the sample, and a critical angle for total reflection is measured using a laser. A refractive index is calculated from a value of the critical angle.

The thickness of the void-containing layer of the present disclosure is not particularly limited, and the lower limit thereof is, for example, 0.05 μm or more, or 0.1 μm or more, and the upper limit thereof is, for example, 1000 μm or less, or 100 μm or less, and the range thereof is, for example, 0.05 μm to 1000 μm, or 0.1 μm to 100 μm.

The form of the void-containing layer of the present disclosure is not particularly limited, and may be, for example, in the form of a film, a block, or the like.

A method for producing the void-containing layer of the present disclosure is not particularly limited, and may be, for example, a method described in WO 2019/065999, or WO 2019/065803, which are incorporated herein by reference.

[3. Pressure-sensitive adhesive/adhesive coating solution]

In the laminate of the present disclosure, the pressure-sensitive adhesive/adhesive layer can be formed using, for example, a pressure-sensitive adhesive/adhesive coating solution as described above. In the present disclosure, a "pressure-sensitive adhesive" and an "adhesive" are not always clearly distinguishable from each other, as will be described later. In the present disclosure, the term "pressure-sensitive adhesive/adhesive" includes both a "pressure-sensitive adhesive" and an "adhesive" unless otherwise specified. The pressure-sensitive adhesive/adhesive coating solution may be, for example, a pressure-sensitive adhesive/adhesive coating solution containing the (meth)acrylic polymer, a pressure-sensitive adhesive/adhesive coating solution containing the organic silyl group-containing compound, or a pressure-sensitive adhesive/adhesive coating solution further containing a crosslinking agent (e.g., an isocyanate-based crosslinking agent or an epoxy-based crosslinking agent), and for example, may further contain a monomer having one or two reactive double bonds per molecule, and an organic peroxide. The pressure-sensitive adhesive/adhesive coating solution is not particularly limited, and is as exemplified as follows, for example.

The pressure-sensitive adhesive/adhesive coating solution may be, for example, one in which the (meth)acrylic polymer is a (meth)acrylic polymer containing, as monomer components, for example, 3 to 20 mass% of a heterocycle-containing acrylic monomer, 0.5 to 5 mass% of (meth)acrylic acid having a polymerizable functional group, 0.05 to 2 mass% of a hydroxyalkyl (meth)acrylate, and 83 to 96.45 mass% of an alkyl (meth)acrylate, and this (meth)acrylic polymer may be used as a base polymer.

As the heterocycle-containing acrylic monomer, for example, one having a polymerizable functional group and having a heterocyclic ring can be used without any particular limitation. Examples of the polymerizable functional group include a (meth)acryloyl group and a vinyl ether group. Among these, a (meth)acryloyl group is preferred. Examples of the heterocyclic ring include a morpholine ring, a piperidine ring, a pyrrolidine ring, and a piperazine ring. Examples of the heterocycle-containing acrylic monomer include N-acryloylmorpholine, N-acryloylpiperidine, N-methacryloylpiperidine, and N-acryloylpyrrolidine. Among these, N-acryloylmorpholine is preferable. Note that, the heterocycle-containing acrylic monomer can improve both heat resistance and humidity in the case of thinning the pressure-sensitive adhesive layer (a pressure-sensitive adhesive/adhesive layer). In the following description, N-acryloylmorpholine is sometimes referred to as "ACMO".

The heterocycle-containing acrylic monomer is preferable from the viewpoint of improving the pressure-sensitive adhesive force of the pressure-sensitive adhesive layer (pressure-sensitive adhesive/adhesive layer) to the optical film. In particular, the heterocycle-containing acrylic monomer is preferable from the viewpoint of improving the pressure-sensitive adhesive force to cyclic polyolefin such as a norbornene resin, and the heterocycle-containing acrylic monomer is suitable when a cyclic polyolefin is used as the optical film.

The heterocycle-containing acrylic monomer is used, for example, at a proportion of 3 to 20 mass% based on the total amount of monomer components forming the (meth)acrylic polymer. The proportion of the heterocycle-containing acrylic monomer may be, for example, 4 to 19 mass%, or 6 to 18 mass%. The proportion of the heterocycle-containing acrylic monomer is preferably not less than the aforementioned range from the viewpoints of the heat resistance and the moisture resistance in the case of thinning the pressure-sensitive adhesive layer (pressure-sensitive adhesive/adhesive

layer). In addition, the proportion of the heterocycle-containing acrylic monomer is preferably not more than the aforementioned range, from the viewpoint of the moisture resistance, in the case of thinning. The proportion of the heterocycle-containing acrylic monomer is preferably not more than the aforementioned range, from the viewpoint of improving the bonding ability of the pressure-sensitive adhesive layer (pressure-sensitive adhesive/adhesive layer). In addition, the proportion of the heterocycle-containing acrylic monomer is preferably not more than the aforementioned range, from the viewpoint of the pressure-sensitive adhesive force.

The (meth)acrylic acid is preferably acrylic acid, in particular.

The (meth)acrylic acid is used, for example, at a proportion of 0.5 to 20 mass% based the total amount of monomer components forming the (meth)acrylic polymer. The proportion of the (meth)acrylic acid may be, for example, 0.5 mass% or more, 1 mass% or more, 2 mass% or more, or 3 mass% or more, and may be, for example, 20 mass% or less, 15 mass% or less, 13 mass% or less, or 10 mass% or less. The proportion of the (meth)acrylic acid is preferably not less than the aforementioned range, from the viewpoint of the heat resistance in the case of thinning the pressure-sensitive adhesive layer (pressure-sensitive adhesive/adhesive layer). In addition, the proportion of the (meth)acrylic acid is preferably not more than the aforementioned range, from the viewpoints of the heat resistance and the moisture resistance in the case of thinning the pressure-sensitive adhesive layer (pressure-sensitive adhesive/adhesive layer). Also, the proportion of the (meth)acrylic acid is preferably not more than the aforementioned range, from the viewpoint of the pressure-sensitive adhesive force.

As the hydroxyalkyl (meth)acrylate, for example, one having a polymerizable functional group and having a hydroxyl group can be used without any particular limitation. Preferable examples of the hydroxyalkyl (meth)acrylate include hydroxyalkyl (meth)acrylates such as 2-hydroxyethyl (meth)acrylate, 2-hydroxybutyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate.

The hydroxyalkyl (meth)acrylate is used, for example, at a proportion of 0.05 to 2 mass% based on the total amount of monomer components forming the (meth)acrylic polymer. The proportion of the hydroxyalkyl (meth)acrylate may be, for example, 0.075 to 1.5 mass%, or 0.1 to 1 mass%. The proportion of the hydroxyalkyl (meth)acrylate is preferably not less than the aforementioned range, from the viewpoint of the heat resistance in the case of thinning the pressure-sensitive adhesive layer (pressure-sensitive adhesive/adhesive layer). In addition, the proportion of the hydroxyalkyl (meth)acrylate is preferably not more than the aforementioned range, from the viewpoints of the heat resistance and the moisture resistance in the case of thinning. Also, the proportion of the hydroxyalkyl (meth)acrylate is preferably not more than the aforementioned range, from the viewpoint of the pressure-sensitive adhesive force.

As the alkyl (meth)acrylate, for example, the alkyl group of the alkyl (meth)acrylate may have an average carbon number of around 1 to 12. Note that, "(meth)acrylate" refers to acrylate and/or methacrylate, and is used with the same meaning as "(meth)" in the present disclosure. Specific examples of the alkyl (meth)acrylate include methyl (meth) acrylate, ethyl (meth)acrylate, n-butyl (meth)acrylate, 2-ethylhexyl (meth)acrylate, isooctyl (meth)acrylate, isononyl (meth)acrylate, and lauryl (meth)acrylate, which may be used alone or in combination. Among these, alkyl (meth)acrylate having 1-9C alkyl group is preferable.

The alkyl (meth)acrylate is used, for example, at a proportion of 83 to 96.45 mass% based on the total amount of monomer components forming the (meth)acrylic polymer. The alkyl (meth)acrylate is usually a remainder excluding the heterocycle-containing acrylic monomer, the (meth)acrylic acid, and the hydroxyalkyl (meth)acrylate.

As the monomer component for forming the (meth)acrylic polymer, for example, in addition to the aforementioned monomers, any monomer other than those aforementioned can be used in a range of 10% or less of the total amount of the monomers, as long as the purpose of the present disclosure is not impaired.

Examples of such a monomer include acid anhydride group-containing monomers such as maleic anhydride and itaconic anhydride; a caprolactone adduct of acrylic acid; sulfonic acid group-containing monomers such as styrenesulfonic acid, allylsulfonic acid, 2-(meth)acrylamido-2-methylpropanesulfonic acid, (meth)acrylamidopropanesulfonic acid, sulfopropyl (meth)acrylate, and (meth)acryloyloxynaphthalenesulfonic acid; and a phosphate group-containing monomer such as 2-hydroxyethyl acryloylylphosphate. Examples of the nitrogen-containing vinyl monomer include maleimide, N-cyclohexylmaleimide, and N-phenylmaleimide; (N-substituted) amide-based monomers such as (meth) acrylamide, N,N-dimethyl(meth)acrylamide, N,N-diethyl(meth)acrylamide, N-hexyl(meth)acrylamide, N-methyl(meth) acrylamide, N-butyl(meth)acrylamide, N-butyl(meth)acrylamide or N-methylol(meth)acrylamide, and N-methylolpropane(meth)acrylamide; alkylaminoalkyl (meth)acrylate monomers such as aminoethyl (meth)acrylate, aminopropyl (meth) acrylate, N, N-dimethylaminoethyl (meth)acrylate, t-butylaminoethyl (meth)acrylate, and 3-(3-pyridinyl)propyl (meth) acrylate; alkoxyalkyl (meth)acrylate monomers such as methoxyethyl (meth)acrylate, and ethoxyethyl (meth)acrylate; and succinimide-based monomers such as N-(meth)acryloyloxymethylene succinimide, N-(meth)acryloyl-6-oxyhexamethylene succinimide, and N-(meth)acryloyl-8-oxyoctamethylene succinimide.

Vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, and N-vinylcaprolactam; cyanoacrylate-type

monomers such as acrylonitrile and methacrylonitrile; epoxy group-containing acrylic monomers such as glycidyl (meth) acrylate; glycol-based acrylic ester monomers such as polyethylene glycol (meth)acrylate, polypropylene glycol (meth) acrylate, methoxyethylene glycol (meth)acrylate, and methoxypolypropylene glycol (meth)acrylate; and acrylic acid ester monomers such as tetrahydrofurfuryl (meth)acrylate, fluorine (meth)acrylate, silicone (meth)acrylate, and 2-methoxyethyl acrylate can also be used.

Examples of the copolymerizable monomers other than those described above include silane-based monomers containing silicon atoms. Examples of the silane-based monomer include 3-acryloxypropyltriethoxysilane, vinyltrimethoxysilane, vinyltriethoxysilane, 4-vinylbutyltrimethoxysilane, 4-vinylbutyltriethoxysilane, 8-vinyloctyltrimethoxysilane, 8-vinyloctyltriethoxysilane, 10-methacryloyloxydecyltrimethoxysilane, 10-acryloyloxydecyltrimethoxysilane, 10-methacryloyloxydecyltriethoxysilane, and 10-acryloyloxydecyltriethoxysilane.

The (meth)acrylic polymer used in the pressure-sensitive adhesive/adhesive layer in the laminate of the present disclosure may have, as described above, a weight-average molecular weight (Mw) of, for example, 1,500,000 to 4,000,000. The weight-average molecular weight may be, for example, 1,800,000 to 3,800,000, and may be, for example, 2,000,000 to 3,500,000 or 2,200,000 to 3,300,000. The weight-average molecular weight is preferably not smaller than the aforementioned range from the viewpoints of the heat resistance and the moisture resistance in the case of thinning the pressure-sensitive adhesive layer (pressure-sensitive adhesive/adhesive layer). In addition, the weight-average molecular weight is preferably not more than the aforementioned range from viewpoints of the aforementioned resistance, the bonding ability, and the pressure-sensitive adhesive force, in the case of thinning. In the present disclosure, the weight-average molecular weight refers to a value obtained from measurement by Gel Permeation Chromatography (GPC) and calculation in terms of polystyrene.

A method for producing such a (meth)acrylic polymer is not particularly limited, and for example, known production methods such as solution polymerization, bulk polymerization, emulsion polymerization, and various radical polymerization can be appropriately selected. Further, the (meth)acrylic polymer obtained may be any of a random copolymer, a block copolymer, a graft copolymer, and the like.

In the solution polymerization, for example, ethyl acetate, toluene, or the like is used as a polymerization solvent. As a specific example of solution polymerization, the reaction is carried out by adding a polymerization initiator under stream of inert gas such as nitrogen, for example, at around 50 to 70°C for around 1 to 30 hours.

A polymerization initiator, a chain transfer agent, an emulsifier, and the like used in the radical polymerization are not particularly limited, and can be appropriately selected. The weight-average molecular weight of the (meth)acrylic polymer can be controlled by the amount of the polymerization initiator or the chain transfer agent, or reaction conditions, and the amount thereof to be used is appropriately adjusted depending on the types of those.

Examples of the polymerization initiator include, but not limited to, azo-based initiators such as 2,2'-azobisisobutyronitrile, 2,2'-azobis(2-amidinopropane)dihydrochloride, 2,2'-azobis [2-(5-methyl-2-imidazoline-2-yl)propane] dihydrochloride, 2,2'-azobis(2-methylpropionamidine)disulfate, 2,2'-azobis(N,N'-dimethyleneisobutylamidine), and 2,2'-azobis [N-(2-carboxyethyl)-2-methylpropionamidine]hydrate (VA-057, manufactured by Wako Pure Chemical Industries, Ltd.); persulfates such as potassium persulfate and ammonium persulfate; peroxide -based initiators such as di(2-ethylhexyl)peroxydicarbonate, di(4-t-butylcyclohexyl)peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butyl peroxyisobutyrate, 1,1-di(t-hexyl peroxy)cyclohexane, t-butyl hydroperoxide, and hydrogen peroxide; and redox initiators of a combination of peroxide and reducing agents, e.g., a combination of persulfate and sodium bisulfite and a combination of peroxide and sodium ascorbate.

One of the polymerization initiators may be used alone or two or more of them may be mixed to be use. The total content of the polymerization initiator may be, for example, about 0.005 to 1 part by mass or about 0.02 to 0.5 part by mass based on 100 parts by mass of the monomers.

When, for example, 2,2'-azobisisobutyronitrile is used as the polymerization initiator to produce the (meth)acrylic polymer having the weight-average molecular weight described above, an amount of the polymerization initiator used may be, for example, about 0.06 to 0.2 part by mass, or about 0.08 to 0.175 part by mass based on 100 parts by mass of the total amount of the monomer components.

Examples of the chain transfer agent include lauryl mercaptan, glycidyl mercaptan, mercaptoacetic acid, 2-mercaptoethanol, thioglycolic acid, 2-ethylhexyl thioglycolate, and 2,3-dimercapto-1-propanol. One of the chain transfer agents may be used alone or two or more of them may be mixed to be used. The total content of the chain transfer agent is, for example, about 0.1 part by mass or less based on 100 parts by mass of the total amount of the monomer components.

Examples of the emulsifier used in the emulsion polymerization include anionic emulsifiers such as sodium lauryl sulfate, ammonium lauryl sulfate, sodium dodecylbenzene sulfonate, ammonium polyoxyethylene alkyl ether sulfate, and sodium polyoxyethylene alkyl phenyl ether sulfate; and nonionic emulsifiers such as polyoxyethylene alkyl ether, polyoxyethylene alkyl phenyl ether, polyoxyethylene fatty acid ester, and polyoxyethylenepolyoxypropylene block polymer. One of the emulsifiers may be used alone or two or more of them may be used in combination.

Further, specific examples of the emulsifier, into which a radically polymerizable functional group such as a propenyl group and an allyl ether group is introduced as a reactive emulsifier, include Akuaron HS-10, HS-20, KH-10, BC-05, BC-10, and BC-20 (all of which are manufactured by DKS Co., Ltd.) and ADEKA REASOAP SE10N (manufactured by ADEKA CORPORATION). Since the reactive emulsifier is incorporated into the polymer chain after the polymerization, the water resistance is improved, which is preferable. The amount of the emulsifier used is, based on 100 parts by mass of the total amount of the monomer components, 0.3 to 5 parts by mass, and more preferably 0.5 to 1 part by mass from the viewpoints of polymerization stability and mechanical stability.

The content of the (meth)acrylic polymer in the pressure-sensitive adhesive/adhesive coating solution is not particularly limited, and may be, for example, 3 mass% or more, or 5 mass% or more, and may be, for example, 30 mass% or less, 20 mass% or less, or 10 mass% or less, based on the total mass of the pressure-sensitive adhesive/adhesive coating solution,.

The pressure-sensitive adhesive/adhesive coating solution may or may not necessarily contain, for example, a monomer having one or two reactive double bonds per molecule. The monomer having one or two reactive double bonds per molecule is not particularly limited, and is preferably acrylic monomers, vinyl-based monomers, methacrylic monomers, or allyl-based monomers, and is more preferably acrylic monomers, from the viewpoint of the reaction rate of the graft reaction. The acrylic monomer is not particularly limited and may be, for example, the same as the monomer exemplified as the monomer component of the acrylic polymer. In the monomer having one or two reactive double bonds per molecule, the structure of the side chain is not particularly limited, and a heterocycle-containing monomer is preferable from the viewpoint of achieving a high elastic modulus and a reduction in the amount of the semipolymeric polymer within a proper range at the same time.

When the pressure-sensitive adhesive/adhesive coating solution contains the monomer having one or two reactive double bonds per molecule, the content thereof is not particularly limited, and may be, for example, 0.1 mass% or more, 0.5 mass% or more, or 1 mass% or more and may be, for example, 30 mass% or less, 20 mass% or less, or 10 mass% or less, based on the total mass of the (meth)acrylic polymer in the pressure-sensitive adhesive/adhesive coating solution.

In the laminate of the present disclosure, the pressure-sensitive adhesive/adhesive layer is formed, as described above, from a pressure-sensitive adhesive/adhesive including a (meth)acrylic polymer and an organic silyl group-containing compound. The organic silyl group of the organic silyl group-containing compound contained in the pressure-sensitive adhesive/adhesive layer may or may not necessarily include a carbon-silicon bond, as described above. That is, the organic silyl group of the organic silyl group-containing compound contained in the pressure-sensitive adhesive/adhesive layer may or may not necessarily include a carbon-silicon bond. Chemical formulae (1) to (4) below exemplify the organic silyl group in the organic silyl group-containing compound. In the chemical formulae (1) to (4) below, each of $R^1$, $R^2$, and $R^3$ represents, for example, a linear or branched alkyl group, such as a methyl group, an ethyl group, an n-propyl group, an isopropyl group, an n-butyl group, a sec-butyl group, or a tert-butyl group, and may be the same as or different from each other. In addition, the organic silyl group in the organic silyl group-containing compound is not limited to the chemical formulae (1) to (4) below and can be freely determined.

[Chemical Formula 2]

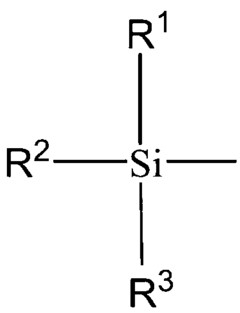
(1)

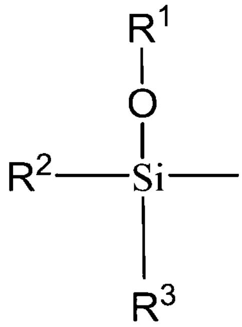
(2)

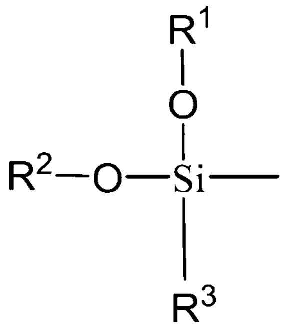
(3)

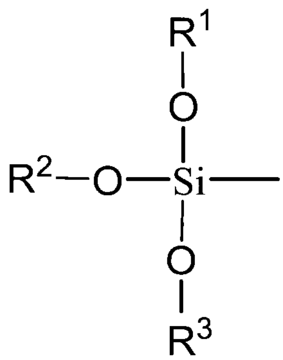
(4)

The laminate of the present disclosure includes an organic silyl group-containing compound in the pressure-sensitive adhesive/adhesive coating solution, and thus can improve durability of the pressure-sensitive adhesive/adhesive layer formed from the pressure-sensitive adhesive/adhesive coating solution, and in particular, achieves excellence

in durability under a humidified environment and maintenance of high durability even after being left for a long period. Here, in the present disclosure, the pressure-sensitive adhesive/adhesive coating solution may be, for example, a pressure-sensitive adhesive (pressure-sensitive adhesive composition). The pressure-sensitive adhesive/adhesive layer may be, for example, a pressure-sensitive adhesive layer formed from a pressure-sensitive adhesive (pressure-sensitive adhesive composition). In the present disclosure, the weight-average molecular weight of the organic silyl group-containing compound may be, for example, 50 or more, 70 or more, 100 or more, or 150 or more, and may be, for example, 30,000 or less, 20,000 or less, 10,000 or less, or 5,000 or less.

The organic silyl group-containing compound may be, for example, a silane coupling agent, and may be, for example, a silane coupling agent having two or more alkoxysilyl groups per molecule. Specific examples of the organic silyl group-containing compound having two or more alkoxysilyl groups per molecule include amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acrylic group-containing silane coupling agents such as 3-acryloxypropyltrimethoxysilane, and 3-methacryloxypropyltriethoxysilane; and isocyanate group-containing silane coupling agents such as 3-isocyanatepropyltriethoxysilane. These coupling agents are preferable because they are less volatile and have a plurality of alkoxysilyl groups, thereby being effective in improving durability. Examples of such coupling agents include trade names KBM-802, X41-1056, and KR-470 manufactured by Shin-Etsu Chemical Co., Ltd.

The organic silyl group-containing compound may or may not necessarily include, for example, an alkoxysilyl group. The alkoxysilyl group is not particularly limited, and examples thereof include groups represented by any of the chemical formulae (2) to (4). The number of alkoxysilyl groups of the organic silyl group-containing compound is not particularly limited, but is preferably two or more per molecule. The amount of the alkoxy groups in the organic silyl group-containing compound is, for example, preferably 10 to 60 mass%, more preferably 20 to 50 mass%, and further preferably 20 to 40 mass%. The type of the alkoxy group is not limited, and examples thereof include alkoxy groups having 1 to 6 carbon atoms such as methoxy, ethoxy, propoxy, butoxy, pentyloxy, and hexyloxy. Among these, methoxy and ethoxy are preferrable, and methoxy is more preferrable. It is also preferable that both methoxy and ethoxy are included in one molecule.

The organic silyl group-containing compound may include, for example, an epoxy group. The organic silyl group-containing compound may also include, for example, an acid anhydride group.

One type of the organic silyl group-containing compound may be used alone, or two or more types thereof may be mixed to be used. The total content of the organic silyl group-containing compound is, based on 100 parts by mass of the (meth)acrylic polymer, 5.0 parts by mass or less as described above, but may be, for example, 4.0 parts by mass or less, 3.0 parts by mass or less, 2.0 parts by mass or less, or 1.0 part by mass or less, and may be, for example, 0.01 part by mass or more, 0.02 part by mass or more, 0.03 part by mass or more, 0.05 part by mass or more, or 0.1 part by mass or more. By setting the content within the aforementioned range, increase in the initial refractive index can be suppressed, and furthermore, a change amount in the refractive index after the heat durability test can be reduced.

Whether the pressure-sensitive adhesive/adhesive layer of the laminate of the present disclosure includes an organic silyl group-containing compound can be determined, for example, by TOF-SIMS (Time-of-Flight Secondary Ion Mass Spectrometry). Specifically, by measuring the pressure-sensitive adhesive/adhesive layer of the laminate of the present disclosure by TOF-SIMS, it is possible to find whether the pressure-sensitive adhesive/adhesive layer includes a specific functional group (e.g., a trimethoxysiloxy group, a triethoxysiloxy group, and a dimethoxymethylsilyl group), thereby finding whether the pressure-sensitive adhesive/adhesive layer contains an organic silyl group-containing compound. Measurement by TOF-SIMS can be performed, for example, under the measurement conditions described below.

[Sample preparation and measurement method]

The pressure-sensitive adhesive/adhesive layer of the laminate of the present disclosure is bonded to a base made of an ITO (indium tin oxide)-deposited glass plate, and is subjected to autoclave treatment (50°C, 5 atm × 15 min). Thereafter, the pressure-sensitive adhesive/adhesive layer is peeled from the base. The surface of the base after the peeling is measured by TOF-SIMS.

[Apparatus and measurement conditions]

TOF-SIMS apparatus: ION TO TOF SIMS5 (trade name of Hitachi High-Tech Corporation) Primary ions irradiated: $Bi_3^{2+}$
Primary ion acceleration voltage: 25 kV

Measurement area: 200 μm square

*For measurement of alkali-free glass, a static charge neutralizing gun is used.

The organic silyl group-containing compound may or may not necessarily include a monomer-type silane coupling agent, but preferably includes the monomer-type silane coupling agent. In the present disclosure, the pressure-sensitive adhesive/adhesive layer including the monomer-type silane coupling agent allows, for example, lowering an initial refractive index of the void-containing layer than in a case where an oligomer-type silane coupling agent is used instead of the monomer-type silane coupling agent.

The monomer-type silane coupling agent is not particularly limited, and examples thereof include amino group-containing silane coupling agents such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; (meth)acrylic group-containing silane coupling agents such as 3-acryloxypropyltrimethoxysilane, and 3-methacryloxypropyltriethoxysilane; and isocyanate group-containing silane coupling agents such as 3-isocyanatepropyltriethoxysilane, described above.

The organic silyl group-containing compound may or may not necessarily include a silane coupling agent other than the monomer-type silane coupling agent. Examples of the silane coupling agent other than the monomer-type silane coupling agent include an oligomer-type silane coupling agent.

The weight-average molecular weight (Mw) of the oligomer-type silane coupling agent may be, for example, 300 or more. The laminate of the present invention includes an oligomer-type silane coupling agent in the pressure-sensitive adhesive/adhesive coating solution, and thus can improve durability of the pressure-sensitive adhesive/adhesive layer formed from the pressure-sensitive adhesive/adhesive coating solution, and in particular, achieves excellence in durability under a humidified environment and maintenance of high durability even after being left for a long period. Here, in the present invention, the pressure-sensitive adhesive/adhesive coating solution may be, for example, a pressure-sensitive adhesive (pressure-sensitive adhesive composition). The pressure-sensitive adhesive/adhesive layer may be, for example, a pressure-sensitive adhesive layer formed from a pressure-sensitive adhesive (pressure-sensitive adhesive composition). Here, the "oligomer-type" refers to a polymer of about a monomer dimer (degree of polymerization of 2) or more and less than a monomer 100-mer (degree of polymerization), and a preferred weight-average molecular weight of the oligomer-type silane coupling agent is about 300 to 30,000. In the present invention, the degree of polymerization of the oligomer-type silane coupling agent is not particularly limited.

The oligomer-type silane coupling agent may be, for example, a silane coupling agent having two or more alkoxysilyl groups per molecule. Specific examples thereof include X-41-1053, X-41-1059A, and X-41-1056 manufactured by Shin-Etsu Chemical Co., Ltd. These coupling agents are preferable because they are less volatile and have a plurality of alkoxysilyl groups, thereby being effective in improving durability.

The number of alkoxysilyl groups of the oligomer-type silane coupling agent is not particularly limited, but is preferably two or more per molecule. The amount of alkoxy groups in the oligomer-type silane coupling agent is, for example, preferably 10 to 60 mass%, more preferably 20 to 50 mass%, and further preferably 20 to 40 mass%, of the silane coupling agent. The type of the alkoxy group is not limited, and examples thereof include alkoxy groups having 1 to 6 carbon atoms such as methoxy, ethoxy, propoxy, butoxy, pentyloxy, and hexyloxy. Among these, methoxy and ethoxy are preferrable, and methoxy is more preferrable. It is also preferable that both methoxy and ethoxy are included in one molecule.

The oligomer-type silane coupling agent may, as described above, include an epoxy group. The epoxy equivalent of the oligomer-type silane coupling agent is, for example, preferably 1,000 g/mol or less, more preferably 500 g/mol or less, and further preferably 300 g/mol or less. A lower limit value of the epoxy equivalent is not particularly limited, but is preferably, for example, 200 g/mol or more.

The oligomer-type silane coupling agent preferably contains an epoxy group, but may contain an acid anhydride group. Use of the oligomer-type silane coupling agent containing an acid anhydride group allows reducing a change amount in refractive index after the heat durability test, and further, improving adhesive force between the pressure-sensitive adhesive layer and a low-refractive-index layer after the heat durability test, compared with a case where a silane coupling agent is not used.

The oligomer-type silane coupling agent may be used alone or may be used as a mixture of two or more types. The total content of the oligomer-type silane coupling agent may be, for example, 1 part by mass or less, and is preferably, for example, 0.2 part by mass or less, based on 100 parts by mass of the (meth)acrylic polymer. By setting the content within the aforementioned range, increase in the initial refractive index can be suppressed, and furthermore, a change amount in refractive index after the heat durability test can be reduced.

The pressure-sensitive adhesive/adhesive coating solution may, for example, contain a crosslinking agent, as described above. The crosslinking agent is not particularly limited, and examples thereof include an isocyanate-based crosslinking agent and an epoxy-based crosslinking agent. The isocyanate-based crosslinking agent is not particularly

limited, and examples thereof include aromatic isocyanates such as tolylene diisocyanate and xylene diisocyanate, alicyclic isocyanates such as isophorone diisocyanate, and aliphatic isocyanates such as hexamethylene diisocyanate. The epoxy-based crosslinking agent is not particularly limited, and examples thereof include bisphenol A-epichlorohydrin-type epoxy resins, ethylene glycol diglycidyl ether, polyethylene glycol diglycidyl ether, glycerin diglycidyl ether, glycerin triglycidyl ether, 1,6-hexanediol diglycidyl ether, trimethylolpropane triglycidyl ether, sorbitol polyglycidyl ether, polyglycerol polyglycidyl ether, pentaerythritol polyglycidyl erythritol, diglycerol polyglycidyl ether, and 1,3'-bis(N,N-diglycidylaminomethyl)cyclohexane, and N,N,N',N'-tetraglycidyl-m-xylylenediamine.

More specific examples of the isocyanate-based crosslinking agent include lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenyl isocyanate; isocyanate adducts such as trimethylolpropane/tolylene diisocyanate trimer adduct (manufactured by Nippon Polyurethane Industry Co., Ltd., trade name Coronate L), trimethylolpropane/hexamethylene diisocyanate trimer adduct (manufactured by Nippon Polyurethane Industry Co., Ltd., trade name Coronate HL), and an isocyanurate of hexamethylene diisocyanate (manufactured by Nippon Polyurethane Industry Co., Ltd., trade name Coronate HX); polyether polyisocyanates; polyester polyisocyanates; adducts of these with various polyols; and polyisocyanates multifunctionalized by isocyanurate bonds, biuret bonds, allophanate bonds, or the like.

More specific examples of the epoxy-based crosslinking agent include, for example, "TETRAD C" manufactured by MITSUBISHI GAS CHEMICAL COMPANY, INC., "TETRAD X" manufactured by MITSUBISHI GAS CHEMICAL COMPANY, INC., and "S-610" manufactured by Synasia.

The crosslinking agent (e.g., an isocyanate-based crosslinking agent, and an epoxy-based crosslinking agent) may be used alone or may be used as a mixture of two or more types. The total content of the crosslinking agent may be, for example, 0.02 to 2 parts by mass, 0.04 to 1.5 parts by mass, or 0.05 to 1 part by mass, based on 100 parts by mass of the (meth)acrylic polymer. The content of the isocyanate-based crosslinking agent is preferably 0.02 part by mass or more from the viewpoint of cohesive force, while being preferably 2 parts by mass or less from the viewpoint of suppressing or preventing decrease in adhesive force due to excessive crosslink formation. The content of the epoxy-based crosslinking agent is preferably 0.01 part by mass or more from the viewpoint of void retention rate, while being preferably 0.5 part by mass or less from the viewpoint of peeling durability.

In the pressure-sensitive adhesive/adhesive coating solution, the crosslinking agent may be formed from, for example, only one of an isocyanate-based crosslinking agent or an epoxy-based crosslinking agent, or may further contain or may not necessarily contain a crosslinking agent other than the isocyanate-based crosslinking agent or the epoxy-based crosslinking agent. Examples of the other crosslinking agent include an organic crosslinking agent and a polyfunctional metal chelate. Examples of the organic crosslinking agent include an epoxy-based crosslinking agent and an imine-based crosslinking agent. Among these, the organic crosslinking agent is preferably an isocyanate-based crosslinking agent or an epoxy-based crosslinking agent. The polyfunctional metal chelate is one in which a polyvalent metal atom is covalently bonded or coordinately bonded to an organic compound. Examples of the polyvalent metal atom include Al, Cr, Zr, Co, Cu, Fe, Ni, V, Zn, In, Ca, Mg, Mn, Y, Ce, Sr, Ba, Mo, La, Sn, and Ti. Examples of an atom in the organic compound that forms a covalent bond or a coordination bond include an oxygen atom. Examples of the organic compound include an alkyl ester, an alcohol compound, a carboxylic acid compound, an ether compound, and a ketone compound.

The pressure-sensitive adhesive/adhesive coating solution may or may not necessarily include an organic peroxide, for example. The organic peroxide is not particularly limited, and examples thereof include di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoyl peroxide, 1,1,3,3-tetramethylbutyl peroxy-2-ethylhexanoate, di(4-methylbenzoyl) peroxide, dibenzoyl peroxide, t-butyl peroxyisobutyrate, 1,1-di(t-hexylperoxy) cyclohexane, and t-butyl hydroperoxide. The organic peroxide may be used alone or in combination of two or more kinds.

When the pressure-sensitive adhesive/adhesive coating solution contains the organic peroxide, the content thereof is not particularly limited, but may be, for example, 0.02 mass% or more, 0.1 mass% or more, 0.5 mass% or more, 1 mass% or more, or 2.5 mass% or more, and may be, for example, 20 mass% or less, 10 mass% or less, 8 mass% or less, or 6 mass% or less, based on the total mass of the (meth)acrylic polymer in the pressure-sensitive adhesive/adhesive coating solution.

The pressure-sensitive adhesive/adhesive coating solution may further include a solvent or the like. The solvent is not particularly limited, and for example, a polymerization solvent used in solution polymerization in the production of the (meth)acrylic polymer may be used as it is.

Further, the pressure-sensitive adhesive/adhesive coating solution may appropriately use, as needed, tackifiers, plasticizers, fillers formed of glass fibers, glass beads, metal powders, or other inorganic powders, pigments, colorants, fillers, antioxidants, ultraviolet absorbers, silane coupling agents, or the like, and various additives within a range that does not deviate from the purpose of the present disclosure. Further, the pressure-sensitive adhesive layer (pressure-sensitive

adhesive/adhesive layer) may include fine particles and exhibit light diffusibility.

The pressure-sensitive adhesive/adhesive layer in the laminate of the present disclosure can be formed using the pressure-sensitive adhesive/adhesive coating solution, for example, by a method described later. The sol component of pressure-sensitive adhesive/adhesive layer may have a weight-average molecular weight of 30,000 to 600,000, for example, in molecular weight measurement of the pressure-sensitive adhesive/adhesive layer by gel permeation chromatography. Further, for example, in the molecular weight measurement of the pressure-sensitive adhesive/adhesive layer by gel permeation chromatography, the content of the low molecular weight component having a molecular weight of 10,000 or less in the sol component of the pressure-sensitive adhesive/adhesive layer may be 20 wt % (mass %) or less. By setting the weight-average molecular weight of the sol content or the content of low-molecular-weight components having a molecular weight of 10,000 or less in the sol content within the specified range, permeation of the pressure-sensitive adhesive into voids of the void-containing layer is further reduced. The weight-average molecular weight of the sol content may be, for example, 50,000 or more, and may be, for example, 550,000 or less or 500,000 or less, and may be, for example, 50,000 to 550,000 or 60,000 to 500,000. Further, the content (proportion) of components having a molecular weight of 10,000 or less in the sol content may be, for example, 20 mass% or less, and may be, for example, 15 mass% or less or 10 mass% or less, based on the total amount (100 mass%) of the sol content, as described above. A lower limit value of the content (proportion) of components having a molecular weight of 10,000 or less in the sol content is not particularly limited, and may be, for example, 0 mass% or more or a numerical value exceeding 0 mass%, and may be, for example, 3 mass% or more. The content (proportion) of components having a molecular weight of 10,000 or less in the sol content may be, for example, 3 to 15 mass%, or 3 to 10 mass%.

[4. Method for producing laminate]

A method for producing the laminate of the present disclosure is not particularly limited, and may be carried out, for example, by a production method described below. However, the following description is merely illustrative and does not limit the present disclosure in any way. The void-containing layer of the present disclosure is not particularly limited, and is, for example, as described above. In addition, a method for producing the void-containing layer of the present disclosure is not particularly limited either, and may be produced, for example, by a method described in WO 2019/065999 or WO 2019/065803.

A method for producing the laminate of the present disclosure may include, for example, producing the pressure-sensitive adhesive/adhesive layer, and bonding the pressure-sensitive adhesive/adhesive layer to the void-containing layer. The method for producing the pressure-sensitive adhesive/adhesive layer may include, for example, applying the pressure-sensitive adhesive/adhesive coating solution to a base and heating and drying the base to which the pressure-sensitive adhesive/adhesive coating solution has been applied. The pressure-sensitive adhesive/adhesive layer may be formed on the void-containing layer of the present disclosure, for example, by bonding a pressure-sensitive adhesive/adhesive layer side of a pressure-sensitive adhesive tape or the like, in which the pressure-sensitive adhesive/adhesive layer of the present disclosure is laminated on a base, onto the void-containing layer of the present disclosure. In this case, the base of the pressure-sensitive adhesive tape or the like may be left as attached, or may be peeled from the pressure-sensitive adhesive/adhesive layer. In particular, by peeling the base to obtain a (base-less) void-containing pressure-sensitive adhesive/adhesive sheet having no base, thickness can be significantly reduced, thereby suppressing increase in thickness of a device or the like. In the present disclosure, a "pressure-sensitive adhesive" and a "pressure-sensitive adhesive layer" refer, for example, to an agent or a layer premised on re-peeling from an adherend. In the present disclosure, an "adhesive" and an "adhesive layer" refer, for example, to an agent or a layer not premised on re-peeling from an adherend. However, in the present disclosure, a "pressure-sensitive adhesive" and an "adhesive" are not always clearly distinguishable from each other, and the "pressure-sensitive adhesive layer" and the "adhesive layer" are not always clearly distinguishable from each other. In the present disclosure, the pressure-sensitive adhesive/adhesive layer can be produced, for example, using the pressure-sensitive adhesive/adhesive coating solution as described above.

The producing the pressure-sensitive adhesive/adhesive layer can be performed, for example, as follows. First, the pressure-sensitive adhesive/adhesive coating solution is produced by mixing all components of the pressure-sensitive adhesive/adhesive coating solution. The pressure-sensitive adhesive/adhesive coating solution may contain, for example, the (meth)acrylic polymer, and may further contain, for example, a crosslinking agent (e.g., an isocyanate-based crosslinking agent, and an epoxy-based crosslinking agent), as described above. The pressure-sensitive adhesive/adhesive coating solution may contain, for example, the (meth)acrylic polymer, a monomer having one or two reactive double bonds per molecule, and an organic peroxide. In this case, when the pressure-sensitive adhesive/adhesive coating solution includes a component other than these, such a component may be mixed together. For example, the polymerization solvent at the time of producing the (meth)acrylic polymer may be mixed as a component of the pressure-sensitive adhesive/adhesive coating solution, without being removed. The method for producing the pressure-sensitive adhesive/adhesive coating solution may or may not necessarily include a process other than the mixing, and may be simply mixing all the components of the pressure-sensitive adhesive/adhesive coating solution in the mixing.

Next, the pressure-sensitive adhesive/adhesive coating solution is applied to a base (applying a pressure-sensitive adhesive/adhesive coating solution). The base is not particularly limited, and may be, for example, a base such as a film. Preferable examples of the base include, but not limited to, thermoplastic resin bases, glass bases, inorganic bases represented by silicon, plastics molded with thermosetting resins or the like, elements such as semiconductors, and carbon fiber-based materials represented by carbon nanotubes. Examples of the form of the base include a film and a plate. Examples of thermoplastic resin include polyethylene terephthalate (PET), acrylic resins, cellulose acetate propionate (CAP), cycloolefin polymer (COP), triacetylcellulose (TAC), polyethylene naphthalate (PEN), polyethylene (PE), and polypropylene (PP). In the applying the pressure-sensitive adhesive/adhesive coating solution, the applied thickness of the pressure-sensitive adhesive/adhesive coating solution is not particularly limited, and may be appropriately adjusted so that, for example, the thickness of the dried pressure-sensitive adhesive/adhesive layer be a predetermined thickness. The thickness of the dried pressure-sensitive adhesive/adhesive layer is not particularly limited either, and is, for example, as described later.

Next, heating and drying the base to which the pressure-sensitive adhesive/adhesive coating solution has been applied are performed (heating and drying). In the heating and drying, a heating and drying temperature is not particularly limited, and may be, for example, 50°C or more, 80°C or more, 100°C or more, or 155°C or more, and may be, for example, 200°C or less, 180°C or less, or 160°C or less. A heating and drying time is not particularly limited, and may be, for example, 0.5 minute or more, 1 minute or more, or 3 minutes or more, and may be, for example, 60 minutes or less, 30 minutes or less, 20 minutes or less, or 10 minutes or less. In the heating and drying, for example, a crosslinking reaction and graft polymerization occur between the (meth)acrylic polymer and the crosslinking agent. As a result, for example, an amount of semi-high-molecular-weight polymers present in the pressure-sensitive adhesive/adhesive coating solution is reduced, and the pressure-sensitive adhesive/adhesive layer becomes less likely to permeate into voids of the void-containing layer, as described above. In this manner, the pressure-sensitive adhesive/adhesive layer to be used in the laminate of the present disclosure can be produced.

Next, bonding the pressure-sensitive adhesive/adhesive layer to the void-containing layer is performed (bonding). This method is not particularly limited, and for example, as described above, the pressure-sensitive adhesive/adhesive layer may be formed on the void-containing layer of the present disclosure by bonding a pressure-sensitive adhesive/adhesive layer side of a pressure-sensitive adhesive tape or the like, in which the pressure-sensitive adhesive/adhesive layer of the present disclosure is laminated on a base, onto the void-containing layer of the present disclosure. In this manner, the laminate of the present disclosure can be produced.

In the method for producing the laminate of the present disclosure, for example, after the bonding, heating the pressure-sensitive adhesive/adhesive layer and the void-containing layer may be further performed. Hereinafter, this heating may be referred to as "aging". In the heating (aging), a heating temperature is not particularly limited, and may be, for example, 40°C or more, 45°C or more, or 50°C or more, and may be, for example, 80°C or less, 70°C or less, 60°C or less, or 55°C or less. A heating time is not particularly limited, and may be, for example, 1 minute or more, 10 minutes or more, 60 minutes or more, or 1,800 minutes or more, and may be, for example, 3,000 minutes or less, 2,800 minutes or less, 2,500 minutes or less, or 2,000 minutes or less. In the aging, for example, the intermediate layer is formed by unification of the void-containing layer and the pressure-sensitive adhesive/adhesive layer. The intermediate layer functions as a stopper, for example, thereby suppressing decrease in void fraction due to voids of the void-containing layer being filled with a pressure-sensitive adhesive, as described above. The unification of the void-containing layer and the pressure-sensitive adhesive/adhesive layer may be one in which the pressure-sensitive adhesive/adhesive layer is embedded in voids of the void-containing layer and chemically bonded thereto, or may be one in which the pressure-sensitive adhesive/adhesive layer is embedded in voids of the void-containing layer.

The pressure-sensitive adhesive/adhesive layer enables protecting the void-containing layer from physical damage (particularly scratches). The pressure-sensitive adhesive/adhesive layer is preferably excellent in pressure resistance so that the void-containing layer does not collapse even when used as a void-containing pressure-sensitive adhesive/adhesive sheet having no base (base-less), but is not particularly limited. The thickness of the pressure-sensitive adhesive/adhesive layer is not particularly limited, and may be, for example, 0.1 to 100 μm, 5 to 50 μm, 10 to 30 μm, or 12 to 25 μm.

The laminate of the present disclosure obtained in this manner may be, for example, further laminated with another film (layer) to form a laminated structure including the void-containing layer (porous structure), as described above. In this case, in the laminated structure, the respective constituent elements may be laminated, for example, via the pressure-sensitive adhesive/adhesive layer (pressure-sensitive adhesive or adhesive).

Lamination of the respective constituent elements may be performed, for example, by continuous processing using a long film (so-called roll-to-roll processing) from the viewpoint of efficiency. When the base is a molded product, an element, or the like, lamination may be performed using one subjected to batch processing.

Hereinafter, a method for forming the laminate of the present disclosure on a base (resin film) will be described, with reference to a continuous processing, taking the laminate 10d of FIG. 3A as an example. Note that, the film-forming method described below is merely an example and the method is not limited thereto.

The base may be, for example, the resin film described above. In this case, the void-containing layer of the present disclosure can be obtained by forming the void-containing layer on the base. Further, the void-containing layer may be formed on the base, and the void-containing layer may be thereafter laminated with the resin film described in the description of the void-containing layer of the present disclosure to obtain the void-containing layer of the present disclosure.

A method for producing the laminate 10d of FIG. 3A may include, for example, first forming the void-containing layer 11 on the base 14, then forming the pressure-sensitive adhesive/adhesive layer 12 on the void-containing layer 11, and further forming the intermediate layer 13 by unification of the void-containing layer 11 and the pressure-sensitive adhesive/adhesive layer 12. More specifically, the method includes, for example, applying a sol particle solution of a pulverized gel compound onto the base (resin film) 14 to form a coating film (1), drying the sol particle solution to form a dried coating film (2), chemically treating the coating film (e.g., crosslinking treatment) to form the void-containing layer 11 (3), bonding the pressure-sensitive adhesive/adhesive layer 12 onto the void-containing layer 11 (4), and reacting the void-containing layer 11 with the pressure-sensitive adhesive/adhesive layer 12 to form the intermediate layer 13 (5). A method for producing the sol particle solution of the pulverized gel compound is not particularly limited. The sol particle solution can be produced, for example, by a method described in WO 2019/065999 or WO 2019/065803. The sol particle solution may also be produced, for example, by a method described in "Reference Example 1" of Examples described below. Although not illustrated, the method for producing the laminate of the present disclosure may further include, as described above, producing the pressure-sensitive adhesive/adhesive layer by the method for producing the pressure-sensitive adhesive/adhesive layer according to the present disclosure, and bonding the pressure-sensitive adhesive/adhesive layer to the void-containing layer. The method for producing the pressure-sensitive adhesive/adhesive layer includes, as described above, applying the pressure-sensitive adhesive/adhesive coating solution to a base, and heating and drying the base to which the pressure-sensitive adhesive/adhesive coating solution has been applied. The chemically treating (crosslinking) (3) corresponds to the "forming the void-containing layer" for forming the void-containing layer in the laminate of the present disclosure. The forming the intermediate layer (5) corresponds to the above-described heating (aging). The forming the intermediate layer (5) (hereinafter also referred to as "aging") may also serve as, for example, improving strength of the void-containing layer 11 (i.e., causing a crosslinking reaction to occur inside the void-containing layer 11). In this case, after the forming the intermediate layer (5), the void-containing layer 11 changes into a void-containing layer 11 having further improved strength. However, the present disclosure is not limited thereto, and for example, the void-containing layer 11 may not change after the forming the intermediate layer (5). The bonding (4) may be, as described above, bonding of a pressure-sensitive adhesive tape having the pressure-sensitive adhesive/adhesive layer onto a base. In FIG. 3A, the base 14 to which the pressure-sensitive adhesive/adhesive coating solution has been applied (on which the pressure-sensitive adhesive/adhesive layer 12 has been formed) may be, for example, peeled and removed from the pressure-sensitive adhesive/adhesive layer 12, or may be left as it is on the pressure-sensitive adhesive/adhesive layer 12. Through the above processes (1) to (5), as shown in FIG. 3A, a laminated film (laminate) in which the void-containing layer 11, the intermediate layer 13, and the pressure-sensitive adhesive/adhesive layer 12 are laminated in this order on the resin film 14 can be produced. However, the forming the intermediate layer (5) may be omitted, and the laminate of the present disclosure to be produced may not include the intermediate layer. Furthermore, the method for producing the laminate of the present disclosure may appropriately include or may not necessarily include a process other than those described above. For example, as in the laminated film (laminate) 10d of FIG. 3A, another base 14 may be further bonded onto the pressure-sensitive adhesive/adhesive layer 12. Although the laminated film (laminate) 10d of FIG. 3A includes the pressure-sensitive adhesive/adhesive layer 12 provided on only one surface of the void-containing layer 11, for example, the pressure-sensitive adhesive/adhesive layer 12 may be respectively provided on both surfaces of the void-containing layer 11, as in the laminate 10e of FIG. 3B.

In the applying (1), a method for applying the sol particle solution is not particularly limited, and may incorporate general coating methods. Examples of the coating method include a slot die method, a reverse gravure coating method, a micro-gravure method (micro-gravure coating method), a dip method (dip coating method), a spin coating method, a brush coating method, a roller coating method, a flexography, a wire-bar coating method, a spray coating method, an extrusion coating method, a curtain coating method, and a reverse coating method. Among them, from the viewpoint of productivity, smoothness of a coating film, etc., the extrusion coating method, the curtain coating method, the roller coating method, and the micro-gravure coating method are preferable. The amount of the sol particle solution to be applied is not particularly limited, and may be appropriately set so that, for example, the void-containing layer 11 has the appropriate thickness. The thickness of the void-containing layer 11 is not particularly limited and is, for example, as described above.

In the drying (2), the sol particle solution is dried (i.e., dispersion medium contained in the sol particle solution is removed) to form the dried coating film (precursor of the void-containing layer). Conditions for the drying are not particularly limited and are as described above.

Further, in the chemically treating (3), the dried coating film including the catalyst or the catalyst generator added before the applying (e.g., a photoactive catalyst, a photocatalyst generator, a thermally active catalyst, or a thermal catalyst generator) is subjected to light irradiation or heating to chemically bond (e.g., crosslinking) the pulverized products to each

other in the dried coating film, thereby forming the void-containing layer 11. Conditions for the light irradiation or heating in the chemically treating (3) are not particularly limited and are as described above.

Although not illustrated, the pressure-sensitive adhesive/adhesive layer of the present disclosure is separately produced through the producing the pressure-sensitive adhesive/adhesive layer. The producing the pressure-sensitive adhesive/adhesive layer (the method for producing the pressure-sensitive adhesive/adhesive layer of the present disclosure) is, for example, as described above.

Further, bonding (4) and forming an intermediate layer (5) are performed. As described above, the forming an intermediate layer (5) is heating the pressure-sensitive adhesive/adhesive layer 12 and the void-containing layer 11 after the bonding (4). For example, when the pressure-sensitive adhesive is a pressure-sensitive adhesive composition including a polymer (e.g., a (meth)acrylic polymer) and a crosslinking agent, the polymer may be crosslinked by the crosslinking agent through the heating. The heating may also serve as drying the pressure-sensitive adhesive. In addition, for example, the heating may also serve as the forming an intermediate layer (5). A temperature of the heating is not particularly limited, and is, for example, 70 to 160°C, 80 to 155°C, or 90 to 150°C. A time of the heating is not particularly limited, and is, for example, 1 to 10 minutes, 1 to 7 minutes, or 2 to 5 minutes.

## Examples

Next, examples of the present disclosure will be described below. It is to be noted, however, that the present disclosure is by no means limited to the following examples.

In the following Reference Examples, Examples, and Comparative Examples, the number (relative usage amount) of each substance is the mass part (weight part) unless otherwise stated. In the following Reference Examples, Examples, and Comparative Examples, a pressure-sensitive adhesive (pressure-sensitive adhesive composition) described later was used as the pressure-sensitive adhesive/adhesive. In the following Reference Examples, Examples, and Comparative Examples, a "pressure-sensitive adhesive layer" corresponds to the "pressure-sensitive adhesive/adhesive layer." That is, in the following Reference Examples, Examples, and Comparative Examples, unless otherwise specified, the "pressure-sensitive adhesive layer" and the "pressure-sensitive adhesive/adhesive layer" are synonymous.

In the following Reference Examples, Examples, and Comparative Examples, the weight-average molecular weight (Mw) of the (meth)acrylic polymer, the gel fraction of the pressure-sensitive adhesive/adhesive layer, the thickness of each layer, and the refractive index were measured by the measurement methods described below.

### Method for measuring molecular weight of (meth)acrylic polymer

From the molecular weight distribution curve measured by Gel Permeation Chromatography (GPC), the weight-average molecular weight (Mw) of the (meth)acrylic polymer was calculated.

- Analyzer: Alliance, manufactured by Waters
- Column: G7000HXL + GMHXL + GMHXL manufactured by Tosoh Corporation
- Column size: 7.8 mm φ × 30 cm each, total 90 cm
- Column temperature: 40°C
- Flow rate: 0.8 mL/min
- Injection volume: 100 μL
- Eluent: THF (added with acid)
- Detector: differential refractometer (RI)
- Standard sample: polystyrene

### Method for measuring gel fraction of pressure-sensitive adhesive/adhesive layer

Around 0.1 g was scraped off from an optical pressure-sensitive adhesive layer formed on a peeling-treated surface of a separator film within 1 minute after preparation to obtain a sample 1. The sample 1 was wrapped in a TEFLON® (registered trademark) film (trade name "NTF1122", manufactured by Nitto Denko Corporation) having a diameter of 0.2

μm and bound with a kite string to obtain a sample 2. The weight of the sample 2 before being subjected to the following test was measured, and the measured weight was defined as weight A. The weight A is the total weight of the sample 1 (pressure-sensitive adhesive layer), the TEFLON® (registered trademark) film, and the kite thread. The total weight of the TEFLON® (registered trademark) film and the kite string was defined as weight B. Then, the sample 2 was placed in a 50 mL container filled with ethyl acetate and allowed to stand at 23°C for 1 week. Thereafter, the sample 2 was taken out from the container and dried in a dryer at 130°C for 2 hours to remove the ethyl acetate, and then the weight of the sample 2 was measured. The weight of the sample 2 after being subjected to the above test was measured, and the measured weight was defined as weight C. Then, the gel fraction was calculated from the following formula.

$$\text{Gel fraction (mass\%)} = (C-B) / (A-B) \times 100$$

Method for measuring thickness

The thicknesses of the pressure-sensitive adhesive layer at five points were measured using a dial gauge, and the average value was used as the thickness of the pressure-sensitive adhesive layer. A thick part with different contrast present between the pressure-sensitive adhesive layer and the low-refractive-index layer in an SEM image was considered as an intermediate layer. The thicknesses of the intermediate layer at two points read in the SEM image was used as the thickness of the intermediate layer.

Method for measuring refractive index

The refractive index was measured by the refractive index evaluation method described above.

Note that, in the pressure-sensitive adhesive/adhesive layers in the following Reference Examples, Examples, and Comparative Examples, it is presumed that the polymers (acrylic polymers) were crosslinked by a crosslinking agent, by heating and drying the applied pressure-sensitive adhesive, thereby forming a crosslinked structure. However, the crosslinked structure has not been demonstrated.

[Reference Example 1: Production of coating solution for forming void-containing layer]

First, gelation (hereinafter referred to as the process (1)) and aging (hereinafter referred to as the process (2)) of a silicon compound were performed to produce a gel having a porous structure (a silicone porous material). Thereafter, the following processes, (3) controlling morphology, (4) substituting solvent, and (5) pulverizing gel were performed to obtain a coating solution for forming a void-containing layer (a gel pulverized product-containing solution). In the present reference example, as described below, (3) controlling morphology described below was performed as a process separate from the following process (1). However, the present disclosure is not limited thereto, and for example, (3) controlling morphology described below may be performed during the following process (1).

(1) Gelation of silicon compound

MTMS, which is a precursor of a silicon compound, was dissolved in 22 kg of DMSO in an amount of 9.5 kg. To the mixed solution, 5 kg of a 0.01 mol/L aqueous oxalic acid solution was added, and the mixture was stirred at room temperature for 120 minutes to hydrolyze the MTMS, thereby generating tris(hydroxy)methylsilane.

55 kg of DMSO was added with 3.8 kg of a 28% aqueous ammonia solution and 2 kg of pure water, and thereafter, added with the hydrolyzed mixed solution, followed by stirring at room temperature for 60 minutes. The liquid after stirring for 60 minutes was poured into a stainless container having a length of 30 cm, a width of 30 cm, and a height of 5 cm, and was allowed to stand at room temperature, thereby gelling the tris(hydroxy)methylsilane to obtain a gel-like silicon compound.

(2) Aging

The gel-like silicon compound obtained by the gelation treatment was incubated at 40°C for 20 hours to perform aging, thereby obtaining the gel in a rectangular solid shape. In this gel, the amount of DMSO (high-boiling solvent having a boiling point of 130°C or higher) used in the raw materials was about 83 mass% of the total raw materials. Therefore, it was clear that the gel contained 50 mass% or more of a high-boiling solvent having a boiling point of 130°C or higher. Further, in this gel, the amount of MTMS (monomer serving as a constituent unit of the gel) used in the raw materials was about 8 mass% of the total raw materials. Therefore, it was clear that the content of a solvent having a boiling point of lower than 130°C (methanol in this case) generated by hydrolysis of the monomer (MTMS) serving as the constituent unit of the gel

was 20 mass% or less.

(3) Controlling morphology

Water, which is a substitution solvent, was poured onto the gel synthesized in the stainless container having dimensions of 30 cm × 30 cm × 5 cm through the above-described processes (1) and (2). Then, in the stainless container, a cutting blade of a cutting jig was slowly inserted into the gel from above to cut the gel into rectangular solid having dimensions of 1.5 cm × 2 cm × 5 cm.

(4) Substituting solvent

Next, the substituting solvent was performed as described in the following (4-1) to (4-3).

(4-1)
After the above-described "(3) Controlling morphology," the gel-like silicon compound was immersed in water having a weight eight times that of the gel-like silicon compound, and was slowly stirred for 1 hour so that only the water was convected. After 1 hour, the water was replaced with the same amount of water, followed by further stirring for 3 hours. Thereafter, the water was replaced again, and then heating was performed at 60°C for 3 hours while slowly stirring.
(4-2)
After (4-1), the water was replaced with isopropyl alcohol having a weight four times that of the gel-like silicon compound, and heating was performed at 60°C for 6 hours while stirring.
(4-3)
After (4-2), the isopropyl alcohol was replaced with the same amount of isobutyl alcohol, and heating was performed at 60°C for 6 hours, thereby substituting the solvent contained in the gel-like silicon compound with isobutyl alcohol. In this manner, a gel for producing the void-containing layer of the present disclosure was produced.

(5) Pulverization gel

After the above-described (4) substituting solvent, the gel (gel-like silicon compound) was pulverized in two stages, including continuous emulsification and dispersion in a first pulverization stage (Milder MDN304, manufactured by Pacific Machinery & Engineering Co., Ltd.), and high-pressure media-less pulverization in a second pulverization stage (Star Burst HJP-25005, manufactured by Sugino Corp.) In this pulverization treatment, 43.4 kg of the solvent-substituted gel-like silicon compound was added with 26.6 kg of isobutyl alcohol, and weighed. Then, the first pulverization stage was performed by circulation pulverization for 20 minutes, and the second pulverization stage was performed at a pulverization pressure of 100 MPa. In this manner, an isobutyl alcohol dispersion liquid in which nanometer-sized particles (the pulverized gel) were dispersed (a gel pulverized product-containing solution) was obtained. Further, 3 kg of the gel pulverized product-containing solution was added with 224 g of a 1.5% concentration solution of methyl isobutyl ketone of WPBG-266 (trade name, manufactured by FUJIFILM Wako Pure Chemical Corporation), and thereafter with 67.2 g of a 5% concentration solution of methyl isobutyl ketone of bis(trimethoxysilyl)ethane (manufactured by TCI), followed by adding and mixing 31.8 g of N,N-dimethylformamide to obtain a coating solution.

In this manner, the coating solution for forming the void-containing layer (gel pulverized product-containing solution) of the present reference example (Reference Example 1) was produced. Further, a result of measurement of a peak pore diameter of the gel pulverized products (fine pore particles) in the coating solution for forming the void-containing layer (the gel pulverized product-containing solution), which was performed by the method described above, was 12 nm.

[Reference Example 2: Formation of pressure-sensitive adhesive/adhesive layer]

The pressure-sensitive adhesive/adhesive layer of the present reference example (Reference Example 2) was formed by the procedures (1) to (2) described below.

(1) Preparation of (meth)acrylic polymer

(Preparation of (meth)acrylic polymer (A1))

A monomer mixture containing 79.5 parts of butyl acrylate, 15 parts of N-acryloylmorpholine, 5 parts of acrylic acid, and 0.5 part of 4-hydroxybutyl acrylate was charged into a four-neck flask equipped with a stirring blade, a thermometer, a nitrogen gas inlet tube, and a condenser. Further, based on 100 parts of the monomer mixture, 0.1 part

of 2,2'-azobisisobutyronitrile as a polymerization initiator was charged together with 70 parts of ethyl acetate. Then, nitrogen gas was introduced while gently stirring to carry out nitrogen substitution. Thereafter, polymerization reaction was conducted for 2 hours while maintaining a liquid temperature in the flask at around 55°C, thereby preparing a solution of a (meth)acrylic polymer (A1) having a weight-average molecular weight (Mw) of 3,400,000 and Mw/Mn of 2.5.

(Preparation of (meth)acrylic polymer (A2))

In the same manner as in the (preparation of the (meth)acrylic polymer (A1)), except that the charged monomer composition was changed to 79.5 parts of butyl acrylate, 7.5 parts of N-acryloylmorpholine, 5 parts of acrylic acid, and 0.5 part of 4-hydroxybutyl acrylate, and the polymerization reaction time was set to 8 hours, a solution of a (meth)acrylic polymer (A2) having a weight-average molecular weight (Mw) of 2,900,000 and Mw/Mn of 4.2 was prepared.

(2) Preparation of pressure-sensitive adhesive composition

Based on 100 parts of solid content of the (meth)acrylic polymer (A1) or (A2), 0.5 part of an organic silyl group-containing compound (trade name "KBM-802", manufactured by Shin-Etsu Chemical Co., Ltd.), 0.2 part of an isocyanate crosslinking agent (trade name "Coronate L", manufactured by Nippon Polyurethane Industry Co., Ltd., a trimethylolpropane/tolylene diisocyanate adduct), 0.1 part of an epoxy-based crosslinking agent (trade name "TETRAD C", manufactured by MITSUBISHI GAS CHEMICAL COMPANY, INC.), and 0.2 part of benzoyl peroxide (trade name "NYPER BMT", manufactured by NOF CORPORATION) were blended, thereby preparing an acrylic pressure-sensitive adhesive composition.

(3) Formation of pressure-sensitive adhesive/adhesive layer

Next, the acrylic pressure-sensitive adhesive composition was applied onto one surface of a polyethylene terephthalate film treated with a silicone-based peeling agent (separator film: MRF38, manufactured by Mitsubishi Chemical Polyester Film Corporation) so that the thickness of the pressure-sensitive adhesive layer after drying became 10 μm, and drying was performed at 155°C for 1 minute to form a pressure-sensitive adhesive layer (a pressure-sensitive adhesive/adhesive layer) on a surface of the separator film.

[Reference Example 3: Modification reaction of nanoparticles with fluoroalkyl groups]

0.06 g of 0.1 N (0.1 mol/L) aqueous HCl solution was added with 0.27 g of IPA (isopropyl alcohol), and stirred to obtain a homogeneous solution. Thus-obtained solution was added with 10 g of MIBK-ST (trade name: MIBK [methyl isobutyl ketone] dispersion of Si nanoparticles, manufactured by Nissan Chemical Corporation), and further with 0.7 g of trimethoxy(1H,1H,2H,2H-nonafluorohexyl)silane. Thus-obtained mixture was heated and stirred at 60°C for 1 hour to cause a modification reaction of the Si nanoparticles, thereby obtaining a fluoroalkyl-group-modified dispersion of the Si nanoparticles (modified nanoparticle dispersion).

[Example 1]

(Production of laminate)

The coating solution for forming a high-void-fraction layer prepared in Reference Example 1 was applied onto an acrylic base and dried to form a void-containing layer having a thickness of about 850 nm (a void fraction of 59 vol%). UV irradiation (300 mJ) was performed from the void-containing layer side. Thereafter, the pressure-sensitive adhesive layer having a thickness of 10 μm obtained in Reference Example 2 (in this Example, the (meth)acrylic polymer (A1) was used) was bonded onto the surface of the void-containing layer, followed by aging at 60°C for 20 hours, thereby producing the laminate of the present example.

[Examples 2 to 21 and Comparative Examples 1 and 2]

Laminates of Examples 2 to 21 and Comparative Examples 1 and 2 were produced as described below.

Solutions of acrylic pressure-sensitive adhesive composition used for producing the laminates of Examples 2 to 21 and Comparative Examples 1 and 2 were prepared in the same manner as in Example 1, except that, in Examples 2 to 21 and Comparative Examples 1 and 2, the type of the (meth)acrylic polymer used was as shown in Table 1 below, the type and added amount (parts by mass) of the organic silyl group-containing compound were as shown in Table 1 below, the added amount (parts by mass) of the crosslinking agent was as shown in Tables 1 and 2 below, and, in Examples 13 to 16,

0.06 g of the modified nanoparticle dispersion obtained in Reference Example 3 was added to 3 g of the coating solution for forming a void-containing layer prepared in Reference Example 1. Further, using the acrylic pressure-sensitive adhesive composition solution, pressure-sensitive adhesive/adhesive layers were produced in the same manner as in Example 1 to produce the laminates of Examples 2 to 21 and Comparative Examples 1 and 2. In Tables 1 and 2 below, all organic silyl group-containing compounds are manufactured by Shin-Etsu Chemical Co., Ltd., and the "type" of each organic silyl group-containing compound is a trade name manufactured by Shin-Etsu Chemical Co., Ltd.

[Heat durability test]

Further, the laminates of Examples and Comparative Examples produced as described above were placed in an oven at a temperature of 65°C and a relative humidity of 95% to perform a heat durability test for 500 hours. From refractive indices before and after the heat durability test, a change rate in refractive index was calculated using the above-described Formula (1).

Evaluation criteria for the change rate in the refractive index after the heat durability test in Tables 1 and 2 are as follows. Note that, the change rates in the refractive index (%) after the heat durability test in Tables 1 and 2 were calculated by $(|n-n_0|/n_0)\times 100$ of Formula (1).

Excellent: less than 2.0%
Good: 2.0% or more and less than 3.0%
Poor: 3.0% or more

Evaluation criteria for the refractive index after the heat durability test (change amount) in Tables 1 and 2 are as follows. Note that, the refractive index after the heat durability test (change amount) is a numerical value calculated by $|n-n_0|$. As in Formula (1), $n_0$ is a refractive index of the void-containing layer before the heat durability test (initial refractive index), and n is a refractive index of the void-containing layer after the heat durability test.

Excellent: less than 0.03
Good: 0.03 or more and less than 0.04
Poor: 0.04 or more

The meanings of the abbreviations and the like shown in Tables 1 are as follows. The numerical values in Table 1 indicate the added amount of each component (parts by mass).

[(Meth)acrylic polymer]

"A1" or "A2" indicates which of the (meth)acrylic polymers A1 or A2 described in Reference Example 2 was used in the formed pressure-sensitive adhesive/adhesive layer. The method for forming the pressure-sensitive adhesive/adhesive layer is as described in Reference Example 2.

[Organic silyl group-containing compound]

Type: Indicates the type of the organic silyl group-containing compound used in each Example and Comparative Example. These are trade names manufactured by Shin-Etsu Chemical Co., Ltd., as described above.
Monomer/oligomer: Indicates whether the organic silyl group-containing compound used in each Example and Comparative Example is a monomer-type silane coupling agent or an oligomer-type silane coupling agent.
Functional group: Indicates the type of functional group in the organic silyl group-containing compound used in each Example and Comparative Example.
Methoxy or ethoxy: Indicates whether the organic silyl group-containing compound used in each Example and Comparative Example has a methoxy group or an ethoxy group, or has a silanol group that is a hydrolyzed form of these groups.

[Crosslinking agent]

Isocyanate: An adduct of tolylene diisocyanate with trimethylolpropane (trade name "Coronate L," manufactured by

Tosoh Corporation).
Epoxy: 1,3-bis(N,N-diglycidylaminomethyl)cyclohexane (trade name "TETRAD C," manufactured by MITSUBISHI GAS CHEMICAL COMPANY, INC.).
Peroxide: Benzoyl peroxide (trade name "NYPER BMT," manufactured by NOF CORPORATION).

[Table 1]

| | (Meth)acrylic polymer | Fluorine-containing compound in void-containing layer | Organic silyl group-containing compound | | | | | Crosslinking agent | | | Change rate in refractive index after 500 h at 65°C, 95% | Change amount in refractive index after 500 h at 65°C, 95% | Initial refractive index |
|---|---|---|---|---|---|---|---|---|---|---|---|---|---|
| | | | Type | Monomer/ oligomer | Functional group | Methoxy or ethoxy | Added amount (parts by weight) | Peroxide | Isocyanate | Epoxy | | | |
| Examplel | A1 | Absent | KBM-802 | Monomer | Mercapto | Methoxy | 0.5 | 0.2 | 0.2 | 0.1 | Excellent | Excellent | 1.193 |
| Example2 | A1 | Absent | KBM-303 | Monomer | Epoxy | Methoxy | 0.1 | 0.2 | 0.2 | 0.1 | Good | Good | 1.187 |
| Example3 | A2 | Absent | KBE-9007 | Monomer | Isocyanate | Ethoxy | 4 | - | 0.3 | 0.3 | Good | Good | 1.196 |
| Example4 | A1 | Absent | KBE-9007 | Monomer | Isocyanate | Ethoxy | 4 | - | 0.3 | 0.3 | Good | Excellent | 1.192 |
| Examples | A1 | Absent | KBM-6803 | Monomer | Amino | Methoxy | 0.5 | 0.2 | 0.2 | 0.1 | Excellent | Excellent | 1.186 |
| Example6 | A1 | Absent | KBM-5103 | Monomer | Acrylic | Methoxy | 0.5 | 0.2 | 0.2 | 0.1 | Good | Excellent | 1.189 |
| Example7 | A1 | Absent | KBM-1403 | Monomer | Styryl | Methoxy | 0.5 | 0.2 | 0.2 | 0.1 | Good | Excellent | 1.188 |
| Example8 | A1 | Absent | KBM-1003 | Monomer | Vinyl | Methoxy | 0.5 | 0.2 | 0.2 | 0.1 | Good | Excellent | 1.188 |
| Example9 | A1 | Absent | KBM-5803 | Monomer | Methacrylic | Methoxy | 0.5 | 0.2 | 0.2 | 0.1 | Good | Excellent | 1.186 |
| Example10 | A1 | Absent | KBM-9659 | Monomer | Isocyanurate | Methoxy | 0.5 | 0.2 | 0.2 | 0.1 | Good | Excellent | 1.189 |
| Examplell | A1 | Absent | KBM-3066 | Monomer | Silane | Methoxy | 0.5 | 0.2 | 0.2 | 0.1 | Good | Good | 1.193 |

[Table 2]

| | (Meth)acrylic polymer | Fluorine-containing compound in void-containing layer | Organic silyl group-containing compound | | | | | Crosslinking agent | | | Change rate in refractive index after 500 h at 65°C, 95% | Change amount in refractive index after 500 h at 65°C, 95% | Initial refractive index |
|---|---|---|---|---|---|---|---|---|---|---|---|---|---|
| | | | Type | Monomer/ oligomer | Functional group | Methoxy or ethoxy | Added amount (parts by weight) | Peroxide | Isocyanate | Epoxy | | | |
| Example12 | A1 | Absent | X12-1135 | Monomer | Carboxylic acid | Silanol (hydrolyzed) | 0.5 | 0.2 | 0.2 | 0.1 | Good | Good | 1.189 |
| Example13 | A1 | Present | X41-1056 | Oligomer | Epoxy | Methoxy | 0.2 | 0.2 | 0.2 | 0.1 | Excellent | Excellent | 1.202 |
| Example14 | A1 | Present | X41-1056 | Oligomer | Epoxy | Methoxy | 0.01 | 0.2 | 0.2 | 0.1 | Good | Good | 1.199 |
| Example15 | A2 | Present | X41-1056 | Oligomer | Epoxy | Methoxy | 0.2 | - | 0.3 | 0.3 | Good | Excellent | 1.205 |
| Example16 | A1 | Present | X24-9591F | Oligomer | Acid anhydride | Methoxy | 0.2 | - | 0.3 | 0.3 | Excellent | Excellent | 1.194 |
| Example17 | A1 | Absent | X41-1810 | Oligomer | Mercapto | Methoxy | 0.2 | - | 0.2 | 0.2 | Good | Good | 1.188 |
| Example18 | A1 | Absent | X41-1056 | Oligomer | Epoxy | Methoxy | 0.5 | - | 0.2 | 0.2 | Excellent | Excellent | 1.207 |
| Example19 | A1 | Absent | KR-470 | Tetrafunctional siloxane oligomer | Alicyclic epoxy group | - | 0.5 | - | 0.2 | 0.2 | Excellent | Excellent | 1.197 |
| Example20 | A1 | Absent | X22-4952 | Oligomer | Hydroxy group | - | 0.5 | - | 0.2 | 0.2 | Good | Good | 1.205 |
| Example21 | A1 | Absent | X22-3710 | Oligomer | Carboxylic acid | - | 0.5 | - | 0.2 | 0.2 | Good | Good | 1.201 |
| Comparative Example 1 | A1 | Absent | KBM-802 | Monomer | Epoxy | Methoxy | 8 | 0.2 | 0.2 | 0.1 | Poor | Poor | 1.202 |
| Comparative Example 2 | A1 | Absent | - | | - | - | - | 0.2 | 0.2 | 0.1 | × | × | 1.187 |

As shown in Table 1, Examples 1 to 21 in which an organic silyl group-containing compound was used exhibited a low initial refractive index, a low refractive index after the heat durability test (change amount), and excellent peel durability. That is, in the laminates of Examples 1 to 21, the pressure-sensitive adhesive was less likely to permeate into the voids of the void-containing layer, resulting in a low initial refractive index and excellent heat durability, while also achieving both these effects and strong adhesion between the pressure-sensitive adhesive/adhesive layer and the low-refractive index layer. In contrast, when the added amount of the organic silyl group-containing compound exceeded 5.0 parts by mass (Comparative Example 1), or when no organic silyl group-containing compound was used (Comparative Example 2), the pressure-sensitive adhesive was likely to permeate into the voids of the void-containing layer, resulting in poor performance in at least one of the initial refractive index, heat durability, or adhesion between the pressure-sensitive adhesive/adhesive layer and the low-refractive index layer. More specifically, Comparative Example 1 exhibited a poor initial refractive index, and Comparative Example 2 exhibited a good initial refractive index but poor heat durability. In all Examples 1 to 21 and Comparative Examples 1 and 2, no fluorine compound was used during formation of the void-containing layers, and thus the void-containing layers did not contain a fluorine compound. Further, as shown in Table 1, the organic silyl group-containing compound used in Examples 1 to 21 had, as a functional group, a mercapto group, an epoxy group, an alicyclic epoxy group, an isocyanate group (isocyanato group), an amino group, an acrylic group, a styryl group, a vinyl group, an isocyanurate group, an acetoacetyl group, a silane group, or a carboxylic acid group (carboxy group), and the above-described effects were achieved with any of these functional groups.

Supplementary Notes

The whole or part of the example embodiments disclosed above can be described as, but not limited to, the following supplementary notes.

(Supplementary Note 1)

A laminate, including:

a void-containing layer, and
a pressure-sensitive adhesive/adhesive layer, wherein
the pressure-sensitive adhesive/adhesive layer is directly laminated on one surface or both surfaces of the void-containing layer,
the pressure-sensitive adhesive/adhesive layer is formed from a pressure-sensitive adhesive/adhesive including a (meth)acrylic polymer and an organic silyl group-containing compound,
an organic silyl group of the organic silyl group-containing compound may or may not necessarily include a carbon-silicon bond, and
an increase rate of a refractive index of the void-containing layer before and after a heat durability test of holding at a temperature of 65°C and a relative humidity of 95% for 500 hours satisfies the following formula (1):

$$(|n - n_0| / n_0) \times 100 < 3.0 \quad (1)$$

in the formula (1),

n represents a refractive index of the void-containing layer after the heat durability test, and
$n_0$ represents a refractive index of the void-containing layer before the heat durability test.

(Supplementary Note 2)

The laminate according to Supplementary Note 1, wherein
a content of the organic silyl group-containing compound is 5.0 parts by mass or less based on 100 parts by mass of the (meth)acrylic polymer.

(Supplementary Note 3)

The laminate according to Supplementary Note 1 or 2, wherein
the organic silyl group-containing compound is a compound including an alkoxysilyl group.

(Supplementary Note 4)

The laminate according to any one of Supplementary Notes 1 to 3, wherein
a weight-average molecular weight (Mw) of the (meth)acrylic polymer is 1,500,000 to 4,000,000.

(Supplementary Note 5)

The laminate according to any one of Supplementary Notes 1 to 4, wherein the pressure-sensitive adhesive/adhesive layer is formed from a pressure-sensitive adhesive/adhesive including the (meth)acrylic polymer and a crosslinking agent, and the pressure-sensitive adhesive/adhesive has a gel fraction exceeding 85%.

(Supplementary Note 6)

The laminate according to any one of Supplementary Notes 1 to 5, wherein the (meth)acrylic polymer contains 1 to 30 mass% of a nitrogen-containing monomer as a monomer unit.

(Supplementary Note 7)

The laminate according to Supplementary Note 6, wherein
the nitrogen-containing monomer is a heterocycle-containing acrylic monomer.

(Supplementary Note 8)

The laminate according to any one of Supplementary Notes 1 to 7, wherein
the (meth)acrylic polymer contains 0.5 to 20 mass% of acrylic acid as a monomer unit.

(Supplementary Note 9)

The laminate according to any one of Supplementary Notes 1 to 8, wherein
the void-containing layer does not include an organic fluorine compound.

(Supplementary Note 10)

The laminate according to Supplementary Notes 1 to 9, further including:

an intermediate layer, wherein
the intermediate layer is present between the void-containing layer and the pressure-sensitive adhesive/adhesive layer, and
the intermediate layer is a layer formed by unification of the void-containing layer and the pressure-sensitive adhesive/adhesive layer.

(Supplementary Note 11)

The laminate according to Supplementary Note 10, wherein
a thickness of the intermediate layer is 10 to 100 nm.

(Supplementary Note 12)

An optical member including the laminate according to any one of Supplementary Notes 1 to 11.

(Supplementary Note 13)

An optical apparatus including the optical member according to Supplementary Note 12.

Industrial Applicability

As described above, the present disclosure can provide a laminate, an optical member, and an optical apparatus, which can achieve both pressure-sensitive adhesive force or adhesive force, and resistance to permeation of a pressure-sensitive adhesive or an adhesive into voids of a void-containing layer. The application of the present disclosure is not particularly limited. For example, the optical apparatus of the present disclosure is not particularly limited, and may be an image display device, an illumination device, or the like. Examples of the image display device include a liquid crystal display, an organic EL display, and a micro LED display. The illumination device may be, for example, an organic EL illumination, or the like. In the laminate of the present disclosure, for example, the pressure-sensitive adhesive or adhesive is less likely to permeate into the voids of the void-containing layer even under high temperature and high humidity, and thus is suitable for the use under severe durability conditions, such as on vehicle. Furthermore, the application of the laminate of the present disclosure is not limited to the optical member and the optical apparatus of the present disclosure, and can be used in a wide range of applications.

This application claims priority from Japanese Patent Application No. 2023-163763 filed on September 26, 2023. The entire subject matter of the Japanese Patent Application is incorporated herein by reference.

Reference Signs List

| | |
|---|---|
| 10, 10a, 10b, 10c, 10d, 10e: | laminate |
| 11: | void-containing layer |
| 12: | pressure-sensitive adhesive/adhesive |
| 13: | intermediate layer |
| 14 : | base |

**Claims**

**1.** A laminate, comprising;

a void-containing layer, and
a pressure-sensitive adhesive/adhesive layer, wherein
the pressure-sensitive adhesive/adhesive layer is directly laminated on one surface or both surfaces of the void-containing layer,
the pressure-sensitive adhesive/adhesive layer is formed from a pressure-sensitive adhesive/adhesive including a (meth)acrylic polymer and an organic silyl group-containing compound,
an organic silyl group of the organic silyl group-containing compound may or may not necessarily include a carbon-silicon bond, and
an increase rate of a refractive index of the void-containing layer before and after a heat durability test of holding at a temperature of 65°C and a relative humidity of 95% for 500 hours satisfies the following formula (1):

$$(|n - n_0| / n_0) \times 100 < 3.0 \qquad (1)$$

in the formula (1),

n represents a refractive index of the void-containing layer after the heat durability test, and
$n_0$ represents a refractive index of the void-containing layer before the heat durability test.

**2.** The laminate according to claim 1, wherein
a content of the organic silyl group-containing compound is 5.0 parts by mass or less based on 100 parts by mass of the (meth)acrylic polymer.

**3.** The laminate according to claim 1, wherein
the organic silyl group-containing compound is a compound including an alkoxysilyl group.

**4.** The laminate according to claim 1, wherein
a weight-average molecular weight (Mw) of the (meth)acrylic polymer is 1,500,000 to 4,000,000.

**5.** The laminate according to claim 1, wherein

the pressure-sensitive adhesive/adhesive layer is formed from a pressure-sensitive adhesive/adhesive including

the (meth)acrylic polymer and a crosslinking agent, and
the pressure-sensitive adhesive/adhesive has a gel fraction exceeding 85%.

**6.** The laminate according to claim 1, wherein
the (meth)acrylic polymer contains 1 to 30 mass% of a nitrogen-containing monomer as a monomer unit.

**7.** The laminate according to claim 6, wherein
the nitrogen-containing monomer is a heterocycle-containing acrylic monomer.

**8.** The laminate according to claim 1, wherein
the (meth)acrylic polymer contains 0.5 to 20 mass% of acrylic acid as a monomer unit.

**9.** The laminate according to claim 1, wherein
the void-containing layer does not include an organic fluorine compound.

**10.** The laminate according to claim 1, further comprising:

an intermediate layer, wherein
the intermediate layer is present between the void-containing layer and the pressure-sensitive adhesive/adhesive layer, and
the intermediate layer is a layer formed by unification of the void-containing layer and the pressure-sensitive adhesive/adhesive layer.

**11.** The laminate according to claim 10, wherein
a thickness of the intermediate layer is 10 to 100 nm.

**12.** An optical member comprising the laminate according to any one of claims 1 to 11.

**13.** An optical apparatus comprising the optical member according to claim 12.

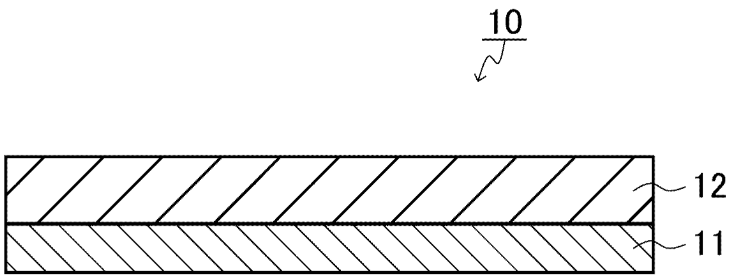


FIG. 1A

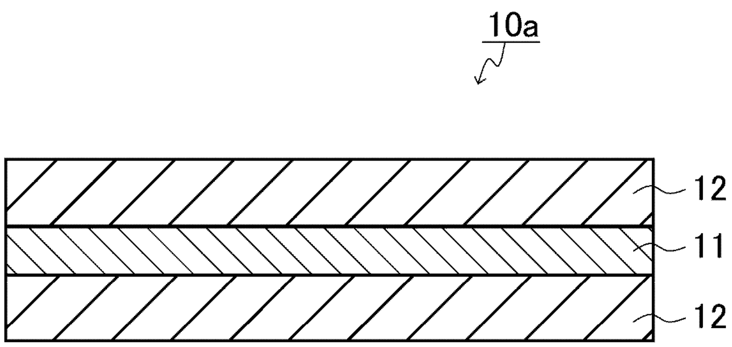


FIG. 1B

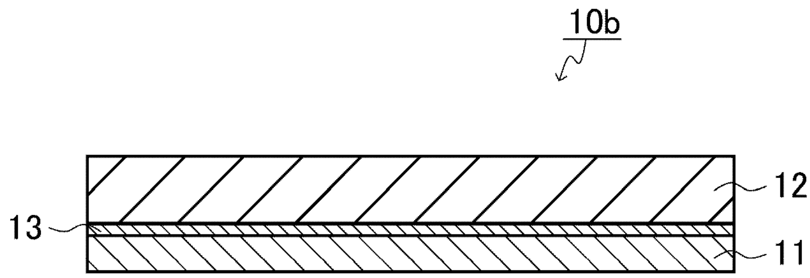


FIG. 2A

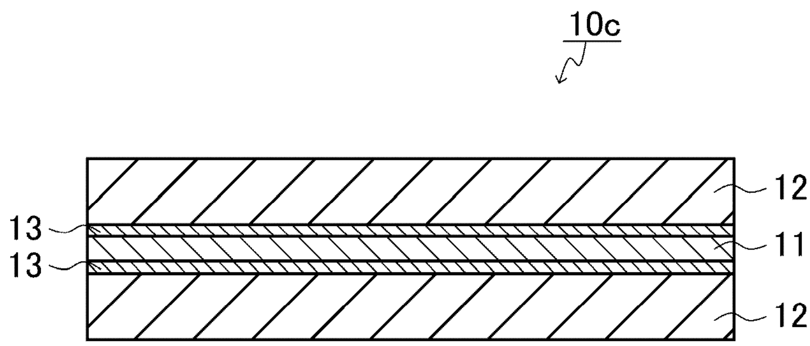


FIG. 2B

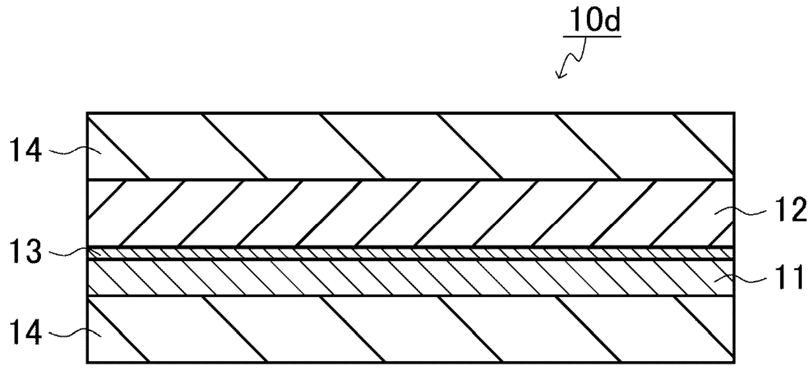


FIG. 3A

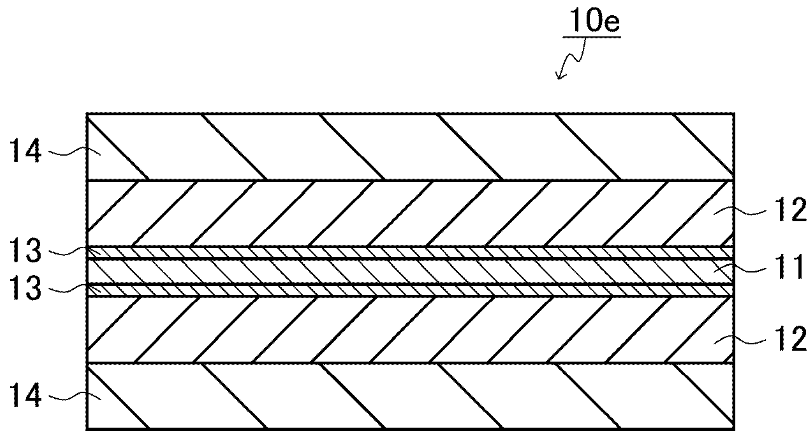


FIG. 3B

## INTERNATIONAL SEARCH REPORT

International application No.
**PCT/JP2024/027029**

### A. CLASSIFICATION OF SUBJECT MATTER

***C09J 7/38***(2018.01)i; ***B32B 3/26***(2006.01)i; ***B32B 7/023***(2019.01)i; ***B32B 27/00***(2006.01)i; ***B32B 27/30***(2006.01)i; ***C09J 7/20***(2018.01)i; ***C09J 133/04***(2006.01)i
FI: C09J7/38; C09J133/04; B32B3/26 A; B32B7/023; B32B27/30 A; B32B27/00 M; C09J7/20

According to International Patent Classification (IPC) or to both national classification and IPC

### B. FIELDS SEARCHED

Minimum documentation searched (classification system followed by classification symbols)

C09J1/00-201/10; B32B1/00-43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-114690 A (NITTO DENKO CORPORATION) 08 August 2022 (2022-08-08) claims 1, 3, 16-17, paragraphs [0145]-[0155], [0157]-[0159], [0172]-[0173], [0179], table 1, example 1 | 1-13 |
| X | JP 2019-64259 A (NITTO DENKO CORPORATION) 25 April 2019 (2019-04-25) claims 4-6, 18-19, paragraphs [0241]-[0245], [0252]-[0254], [0280]-[0285], [0293], table 1, example 5 | 1-13 |
| A | JP 2023-51690 A (NITTO DENKO CORPORATION) 11 April 2023 (2023-04-11) claims 1-16, tables 1-3, examples 1-11 | 1-13 |
| P, X | WO 2023/190103 A1 (NITTO DENKO CORPORATION) 05 October 2023 (2023-10-05) claims 1-11, paragraphs [0155]-[0172], table 1, examples 1-4 | 1-13 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027029**

| Patent document cited in search report | Publication date (day/month/year) | Patent family member(s) | Publication date (day/month/year) |
|---|---|---|---|
| JP 2022-114690 A | 08 August 2022 | (Family: none) | |
| JP 2019-64259 A | 25 April 2019 | US 2020/0223175 A1<br>claims 4-6, 18-19, reference examples 1-2, example 5, table 1<br>WO 2019/065999 A1<br>EP 3686006 A1<br>TW 201922477 A<br>CN 111183031 A<br>KR 10-2020-0062221 A | |
| JP 2023-51690 A | 11 April 2023 | EP 4393700 A1<br>claims, tables 1-3, examples 1-11<br>WO 2023/053912 A1<br>TW 202327863 A<br>CN 118159615 A<br>KR 10-2024-0087697 A | |
| WO 2023/190103 A1 | 05 October 2023 | CN 118632910 A<br>TW 202340638 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012156082 A
- JP H10199862626 A
- JP 2014046518 A
- WO 2019065999 A
- WO 2019065803 A
- JP 2023163763 A